Europäisches Patentamt

European Patent Office

Office européen des brevets

(19)

(11) Numéro de publication : **0 055 638**
**B1**

(12)  **FASCICULE DE BREVET EUROPÉEN**

(45) Date de publication du fascicule du brevet :
05.03.86

(51) Int. Cl.⁴ : **B 63 H   9/00**, B 64 C  21/06,
F 15 D   1/12, F 03 D   1/06

(21) Numéro de dépôt : **81401749.7**

(22) Date de dépôt : **30.10.81**

(54) **Dispositif à très haute portance pour la propulsion éolienne des navires et autres applications.**

(30) Priorité : **01.12.80 FR 8025456**
**03.04.81 FR 8106751**

(43) Date de publication de la demande :
**07.07.82 Bulletin 82/27**

(45) Mention de la délivrance du brevet :
**05.03.86 Bulletin 86/10**

(84) Etats contractants désignés :
**DE FR GB IT NL SE**

(56) Documents cités :
**DE-C-   426 815**
**FR-A-   597 674**
**FR-A- 1 582 919**
**GB-A-   222 845**
**US-A- 1 913 644**
**US-A- 2 713 392**
**US-A- 3 643 617**

(73) Titulaire : **FONDATION COUSTEAU**
**25, Avenue de Wagram**
**F-75017 Paris (FR)**

(72) Inventeur : **Cousteau, Jacques Yves**

**19 bis, rue de Belgique (MC)**
Inventeur : **Malavard, Lucien Clément**
**25, Avenue Ferdinand Buisson**
**F-75016 Paris (FR)**
Inventeur : **Charrier, Bertrand**
**6, rue des Châtelaines**
**F-92190 Meudon (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**0 055 638**

## Description

La présente invention se rapporte à un dispositif destiné à être placé dans un fluide en mouvement tel que de l'air afin de produire, à partir d'une dépense énergétique aussi faible que possible, une force portante très élevée pouvant notamment être utilisée pour assurer la propulsion d'un corps mobile tel qu'un bateau ou pour créer de l'énergie.

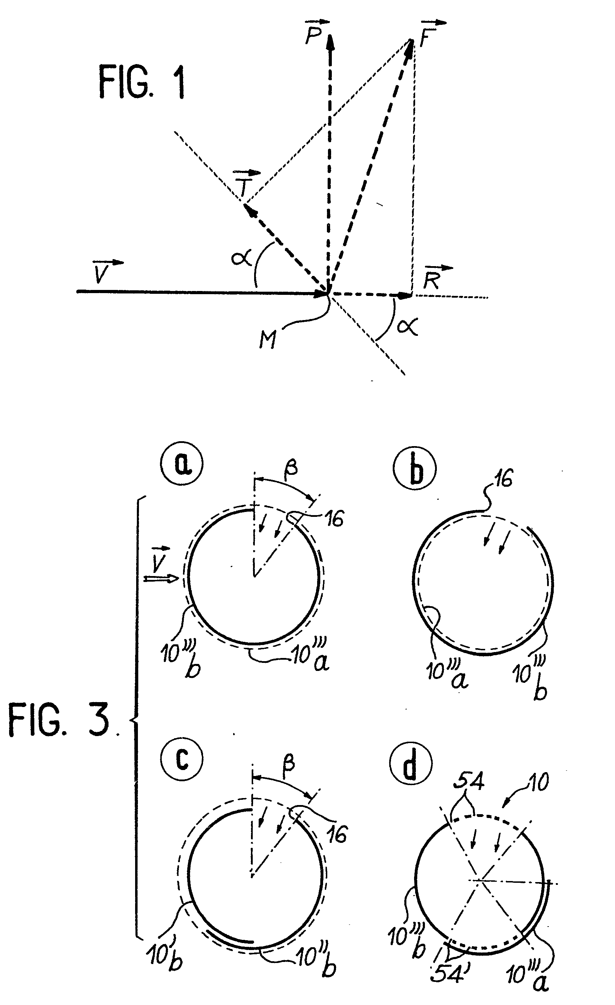

La figure 1 des dessins annexés montre qu'un dispositif M tel qu'une voile, placé dans un fluide se déplaçant à une vitesse relative $\vec{V}$ par rapport à ce dispositif produit un effort $\vec{F}$ qui se décompose en une force portante $\vec{P}$ perpendiculaire à la vitesse $\vec{V}$ et en une force de traînée $\vec{R}$ dirigée dans le même sens que la vitesse $\vec{V}$. Si le dispositif M se déplace dans une direction faisant un angle $\alpha$ avec la vitesse $\vec{V}$, il est soumis à un effort de traction T qui correspond à la projection de l'effort F sur cette direction. On voit donc que pour une valeur donnée de l'angle $\alpha$, l'intensité de l'effort de traction $\vec{T}$ est d'autant plus grande que la force portante $\vec{P}$ est élevée et que la force de traînée $\vec{R}$ est réduite lorsque $\alpha$ est inférieur à 90°.

La portance et la traînée s'expriment en général par des coefficients sans dimension Cz et Cx donnés par les formules suivantes :

$$Cz = \frac{P}{1/2 \, \rho \, V^2 S} \quad \text{et}$$

$$Cx = \frac{R}{1/2 \, \rho \, V^2 S}$$

où $\rho$ désigne la masse volumique du fluide et S la surface de référence du dispositif, c'est-à-dire la surface de ce dispositif en projection sur un plan normal à la figure 1 et parallèle à la direction selon laquelle se déplace le fluide.

Tenant compte de ces expressions, on voit que l'effort de traction $\vec{T}$ s'exprime par la formule suivante :

$$T = 1/2 \, \rho \, V^2 S \, (Cz \sin \alpha - Cx \cos \alpha)$$

Cette formule fait apparaître clairement que, pour une vitesse $\vec{V}$ d'écoulement du fluide donnée et pour une orientation $\alpha$ de l'effort de traction donnée, cet effort est d'autant plus grand que le produit S × Cz est élevé.

Si l'on applique ces résultats aux dispositifs traditionnels permettant de créer une force portante sans apport d'énergie extérieure, tels que les ailes des avions, les voiles des bateaux, les pales des moulins à vent, etc..., dans lesquels le coefficient Cz est pratiquement toujours inférieur à trois, on voit que la création d'un effort de traction $\vec{T}$ important demande des surfaces trop grandes et encombrantes pour être pratiquement utilisables.

D'autre part, on sait créer des forces portantes P ou des coefficients de portance Cz très élevés en utilisant un dispositif bénéficiant d'un apport d'énergie extérieure. Ainsi, l'effet Magnus montre qu'en faisant tourner autour de son axe un cylindre circulaire dans un écoulement fluide, on crée autour de ce cylindre une déflexion de l'écoulement qui engendre une force importante, positive ou négative, selon le sens de rotation du cylindre. La rotation du cylindre circulaire a également pour effet de retarder et de réduire les décollements de l'écoulement fluide autour du cylindre et l'importance du sillage obtenue.

Toutefois, si l'utilisation de l'effet Magnus permet de créer de grands coefficients Cz, on voit immédiatement que les vitesses périphériques de rotation du cylindre conduisant à un tel résultat entraînent des complications mécaniques importantes si l'on considère que les dimensions du cylindre doivent être par exemple de trois mètres de diamètre et de quinze mètres de hauteur pour assurer la propulsion d'un bateau. Ces complications mécaniques sont liées notamment aux vibrations, aux effets gyroscopiques, etc., engendrées par la rotation d'un tel cylindre qui peut atteindre une vitesse de rotation de 200 à 400 tours par minute lorsque la vitesse du vent est élevée. De plus, dans l'application à la propulsion d'un bateau, on voit que si l'on désire inverser le sens de la force portante, il est nécessaire d'inverser le sens de rotation du cylindre, ce qui réclame un délai relativement long compte tenu de son inertie.

Les documents GB-A-222 845 et US-A-2 713 392 illustrent différentes solutions proposées précédemment à ce problème. Toutefois, les forces portantes obtenues avec de tels dispositifs se sont avérées sensiblement inférieures aux valeurs annoncées et surtout l'énergie mise en œuvre est telle qu'ils s'avèrent pratiquement sans intérêt.

2

Par ailleurs, comme l'illustrent le document Schlichting/Trucken-brodt « Aerodynamik des Flugzeugs » 1. Band, Springer Verlag, Berlin, pages 264-267 et le brevet US-A-1 913 644, différentes tentatives ont été faites dans le domaine des ailes d'avions et les pales d'hélicoptères pour accroître les forces portantes, mais dans des conditions très différentes et sans tenir compte ici encore de la dépense énergétique.

La présente invention a pour objet la réalisation d'un dispositif permettant de produire une force portante très élevée en bénéficiant d'un apport d'énergie extérieure aussi limité que possible et sans présenter les inconvénients des dispositifs de la technique antérieure tels que le cylindre circulaire tournant fonctionnant selon l'effet Magnus. Bien entendu, le dispositif selon l'invention peut être appliqué aussi bien à la propulsion d'un mobile quelconque tel qu'un navire qu'à la production d'énergie mécanique pouvant notamment être transformée en énergie électrique à l'aide d'une génératrice, et il peut utiliser aussi bien l'énergie éolienne que celle de courants fluviaux ou marins.

Dans ce but et conformément à l'invention, il est proposé un dispositif destiné à être placé dans un fluide en mouvement selon une première direction afin de produire une force portante selon une deuxième direction transversale par rapport à cette première direction, ce dispositif comprenant un corps allongé présentant en section droite selon la première direction un profil arrondi, des moyens pour aspirer le fluide à l'intérieur du corps dans une zone d'aspiration située au moins sur le bord de fuite du profil sur un premier côté sur lequel ladite force portante doit être produite, et un volet faisant saillie par rapport au corps, sur le bord de fuite du profil, du côté opposé à la deuxième direction (connue du US-A-2 713 392), caractérisé en ce que ledit profil comporte un bord d'attaque allongé suivant une loi pseudo-elliptique et un bord de fuite suivant une loi semi-circulaire, ce profil étant symétrique par rapport à un axe de symétrie unique définissant avec la première direction un angle d'incidence orienté selon la deuxième direction, l'épaisseur maximum du profil étant comprise entre 50 % et 100 % de sa longueur dans le sens défini par son axe de symétrie.

Les trois caractéristiques essentielles de l'invention qui viennent d'être exposées contribuent à la réalisation d'un dispositif de propulsion éolienne facile à mettre en œuvre et permettant, pour une dépense énergétique particulièrement faible, de créer des forces portantes élevées.

Ces avantages résultent notamment du caractère très épais du profil du corps allongé. En effet, le coefficient de portance croît comme le sinus de l'angle d'incidence, affecté d'un coefficient qui varie du simple au double entre un profil mince et un profil très épais.

Les avantages procurés par l'invention résultent aussi de la forme allongée du bord d'attaque du profil, qui permet de limiter la zone dans laquelle il est nécessaire de créer d'importantes dépressions à une partie très limitée du profil, ce qui réduit considérablement la dépense énergétique. Ainsi, il est nécessaire de créer des dépressions lorsque la distribution des vitesses de la couche limite dans l'écoulement fluide d'extrados tend à diminuer ou, en d'autres termes, lorsque le gradient de pression devient positif. Or, on observe que la forme allongée du bord d'attaque permet de retarder très sensiblement cette condition et, en conséquence, de limiter la zone de l'écoulement d'extrados dans laquelle il faut intervenir à des dimensions relativement faibles.

Les performances particulièrement remarquables du dispositif selon l'invention résultent également, dans le mode de réalisation préféré selon lequel les importantes dépressions sont créées en aspirant le fluide à l'intérieur du corps au niveau de la zone considérée, de la combinaison de ces moyens d'aspiration avec le profil épais du corps. En effet, l'épaisseur du profil définit une chambre d'aspiration suffisamment grande pour que les pertes de charge soient réduites à un niveau aussi faible que possible, contribuant ainsi à réduire la dépense énergétique du dispositif.

Enfin, la fixation de la séparation des écoulements d'extrados et d'intrados, qui s'effectue de préférence au moyen d'un volet, c'est-à-dire sans autre dépense énergétique, permet d'empêcher la formation de tourbillons parasites tendant à diminuer la portance pour une énergie donnée.

On voit ainsi que les différentes caractéristiques du dispositif selon l'invention se combinent pour procurer des résultats surprenants, que l'on illustrera en notant que, lorsque le corps définit une surface de référence ou surface portante de 150 m$^2$, il est possible en utilisant pour créer la dépression un moteur d'appoint de 90 CV et par un vent de 12 m/s (24 nœuds) d'assurer la propulsion d'un navire à une vitesse maximum de 14 nœuds dans le cas le plus favorable où l'angle a fait par la direction selon laquelle se déplace le bateau par rapport à la direction de l'écoulement fluide est d'environ 60°. En comparaison, pour produire les mêmes résultats, une voile devrait présenter une surface d'environ 1 000 m$^2$, ce qui conduirait à accroître de façon considérable l'encombrement du bateau ainsi que le nombre de personnes ou systèmes nécessaires pour assurer la manœuvre. Afin d'illustrer l'économie d'énergie réalisée grâce au dispositif selon l'invention, on notera également que les performances qui viennent d'être indiquées dans le cas du dispositif selon l'invention nécessiteraient pour un navire équipé de moyens de propulsion classiques un moteur d'environ 1 200 CV. Enfin, il est clair que l'utilisation d'un dispositif restant pratiquement immobile par rapport au navire permet d'éliminer tous les problèmes mécaniques inhérents aux dispositifs à cylindre tournant utilisant l'effet Magnus.

Selon une caractéristique préférée de l'invention, des moyens sont prévus pour orienter automatiquement l'axe de symétrie défini par le profil du corps par rapport à la direction du fluide en mouvement.

En pratique, le bord d'attaque allongé est constitué par un carénage pouvant notamment présenter en section la forme d'une demi-ellipse, d'un arc de parabole, etc... La surface importante de ce carénage peut devenir gênante lorsque les conditions de circulation de l'air ou de l'eau sont anormales. Ainsi, on conçoit aisément que l'augmentation de la section efficace du corps allongé placé dans le fluide en mouvement résultant de l'utilisation du carénage a pour effet de fragiliser le dispositif lorsque la vitesse de déplacement du fluide en mouvement est très supérieure à sa vitesse normale. Cela est notamment le cas lorsque ce dispositif est utilisé pour la propulsion d'un navire et lorsqu'une tempête se produit.

Afin d'éviter que le dispositif soit endommagé lorsqu'il est placé dans un fluide en mouvement circulant à une vitesse très sensiblement supérieure à sa vitesse normale, il est possible, soit de lui donner une résistance accrue, soit d'équiper le corps d'au moins une partie escamotable au niveau de son bord d'attaque allongé.

On comprend que cette caractéristique permet d'améliorer le tenue du dispositif dans des conditions de fonctionnement particulièrement défavorables puisque l'escamotage du bord d'attaque allongé peut permettre de réduire à tout moment la section efficace du corps placé dans le fluide en mouvement.

Conformément à l'invention, différents modes de réalisation de la partie escamotable peuvent être envisagés. Ainsi, si le corps allongé comprend une enveloppe cylindrique rigide, définissant le bord de fuite, il est possible de réaliser le bord d'attaque soit au moyen d'une enveloppe souple et gonflable présentant une paroi simple ou double, soit au moyen d'une virole mobile susceptible de se déplacer radialement par rapport à l'enveloppe cylindrique et reliée à cette dernière par des cloisons souples, soit au moyen d'un bec souple placé entre deux supports tels que des mâts ou des filins sensiblement parallèles à l'axe de l'enveloppe. Enfin, l'ensemble du corps allongé peut être télescopique et notamment réalisé en plusieurs parties rigides ou au moins en partie en une matière souple, de telle sorte que sa longueur peut être réduite à volonté.

Afin d'autoriser une inversion du sens de la force partante, la zone d'aspiration et le volet peuvent être soit réalisés en deux exemplaires, l'un s'effaçant quand l'autre est utilisé, et placés symétriquement par rapport à l'axe de symétrie défini par le corps, soit réalisés en un seul exemplaires et susceptibles de se déplacer par rapport à ce dernier de part et d'autre de son axe de symétrie.

Dans ce dernier cas, selon un mode de réalisation particulièrement avantageux de l'invention, il est proposé un dispositif destiné à être placé dans un fluide en mouvement selon une première direction afin de produire une force portante selon une deuxième direction transversale par rapport à la première direction, ce dispositif comprenant un corps allongé présentant en section droite selon la première direction un profil arrondi, des moyens pour aspirer le fluide à l'intérieur du corps dans une zone d'aspiration perméable située au moins sur le bord de fuite du profil, et un volet rigide, sensiblement plan, faisant saillie par rapport au corps et situé sur le bord de fuite du profil, du côté opposé au côté sur lequel ladite force portante doit être produite, ledit volet étant orientable par rapport au corps pour permettre une inversion de la force portante, ledit profil définissant un bord d'attaque dont l'épaisseur va en croissant de l'avant vers l'arrière et un bord de fuite arrondi dont l'épaisseur décroît de l'avant vers l'arrière (connu du US-A-2 713 392), caractérisé en ce que ledit profil est symétrique par rapport à un axe de symétrie unique définissant avec la première direction un angle d'incidence orienté selon la deuxième direction, le bord d'attaque dudit profil étant allongé, l'épaisseur maximum du profil étant comprise entre 50 % et 100 % de sa longueur dans le sens défini par son axe de symétrie, ledit corps allongé comprenant une enveloppe imperméable comportant deux zones d'aspiration perméables disposées symétriquement par rapport audit axe de symétrie et une enveloppe imperméable orientable afin d'occulter l'une des zones d'aspiration située sur un côté du profil opposé au côté sur lequel ladite force portante doit être produite, le volet étant porté par ladite enveloppe imperméable orientable afin de former avec cette dernière une seule pièce orientable dont le déplacement d'un côté à l'autre du profil permet d'inverser la direction de la force portante.

Conformément à une autre caractéristique de l'invention, un flasque est monté de préférence à chacune des extrémités du corps pour limiter les effets défaborables des tourbillons marginaux.

Afin d'accroître encore l'efficacité du dispositif, chacun des flasques peut comprendre une partie circulaire entraînée en rotation dans le sens de l'écoulement fluide d'extrados ou être muni de moyens d'aspiration.

Conformément à un mode de réalisation particulier de l'invention, les moyens d'aspiration comprennent alors au moins un ventilateur dont l'axe est parallèle à l'axe longitudinal du corps allongé, ce ou ces ventilateurs étant placé(s) à l'intérieur de ce dernier respectivement à proximité de chacune de ses extrémités pour aspirer le fluide vers l'intérieur du corps sur toute la distance qui les sépare et souffler ce fluide vers l'extérieur au travers de chacun des flasques. On comprend que cette solution est particulièrement adaptée au cas où le corps allongé est télescopique. Toutefois, elle peut aussi être utilisée avec toutes les autres variante de réalisation du carénage. De préférence, le soufflage est effectué radialement sur un arc de la périphérie de chacun des flasques et du côté du bord de fuite. La section de soufflage est suffisamment grande pour limiter autant que possible la perte de charge qui accroît la consommation d'énergie.

On décrira maintenant, à titre d'exemple non limitatif, différentes variantes de réalisation de l'invention en se référant aux figures annexées dans lesquelles :

la figure 1 déjà décrite, montre de façon schématique l'effort de traction $\vec{T}$ auquel est soumis un dispositif placé au point $\underline{M}$ et se déplaçant dans une direction d, ce dispositif créant une force portante $\vec{P}$ et une force de traînée $\vec{R}$ lorsqu'il est placé dans un écoulement fluide de vitesse $\vec{V}$ ;

les figures 2a à 2d illustrent de façon schématique, en section droite, différentes variantes de réalisation du dispositif selon l'invention, le profil du corps allongé étant représenté comme étant circulaire pour simplifier l'exposé ;

les figures 3a à 3d illustrent de façon schématique trois modes de réalisation possibles des moyens d'aspiration utilisés dans les variantes de réalisation de l'invention représentées sur les figures 2a à 2d ;

les figures 4a à 4c illustrent de façon schématique trois modes de réalisation possibles des volets utilisés dans les variantes de réalisation de l'invention représentées sur les figures 2a à 2c ;

les figures 5a et 5b illustrent de façon schématique deux modes de réalisation possibles des moyens de soufflage radial ou tangentiel utilisés dans les variantes de réalisation représentées sur les figures 2b à 2d ;

les figures 6a et 6b illustrent de façon schématique un autre mode de réalisation des moyens de soufflage utilisés dans les variantes de réalisation de l'invention des figures 2b à 2d, ce mode de réalisation pouvant être utilisé indifféremment comme l'illustrent ces deux figures pour effectuer un soufflage tangentiel, radial ou incliné et produisant de plus dans le premier cas un effet de trompe accélérant encore la couche limite du fluide voisine du corps,

la figure 7 illustre de façon schématique, en section droite, la caractéristique de l'invention selon laquelle le profil du corps est allongé du côté du bord d'attaque, l'axe de symétrie de ce profil étant incliné d'un angle d'incidence i par rapport à la direction de la vitesse $\vec{V}$ d'écoulement du fluide,

les figures 8a à 8e illustrent de façon schématique, en section droite, différentes variantes de réalisation du carénage du dispositif représenté sur la figure 7, ce carénage étant susceptible d'être escamoté lorsque le vent ou le courant dans lequel est placé ce dispositif atteint une valeur trop importante,

les figures 9a à 9e illustrent de façon schématique différentes variantes de réalisation des flasques qui sont placés de préférence aux extrémités du corps du dispositif selon l'invention, le profil du corps étant représenté ici encore comme étant circulaire, afin de simplifier l'exposé,

la figure 10 illustre de façon schématique une autre variante de réalisation des flasques placés aux extrémités du corps du dispositif, le profil du bord d'attaque du corps étant allongé conformément à l'invention,

la figure 11 est une vue de côté, en coupe partielle, montrant un premier mode de réalisation du dispositif selon l'invention dans lequel un ventilateur est placé à chacune des extrémités du corps allongé afin de réaliser l'aspiration du fluide à l'intérieur du corps,

la figure 12 est une vue en coupe transversale selon la ligne XII-XII de la figure 11,

la figure 13 est une vue en perspective éclatée montrant un deuxième mode de réalisation de l'invention selon lequel des ventilateurs sont disposés sur toute la longueur du corps, les axes de ces ventilateurs étant disposés dans un même plan et perpendiculaires à l'axe de symétrie du profil du corps allongé,

la figure 14 est une vue en coupe transversale du corps du dispositif représenté sur la figure 13, et

la figure 15 illustre de façon schématique l'implantation de deux dispositifs réalisés conformément à l'invention sur un navire.

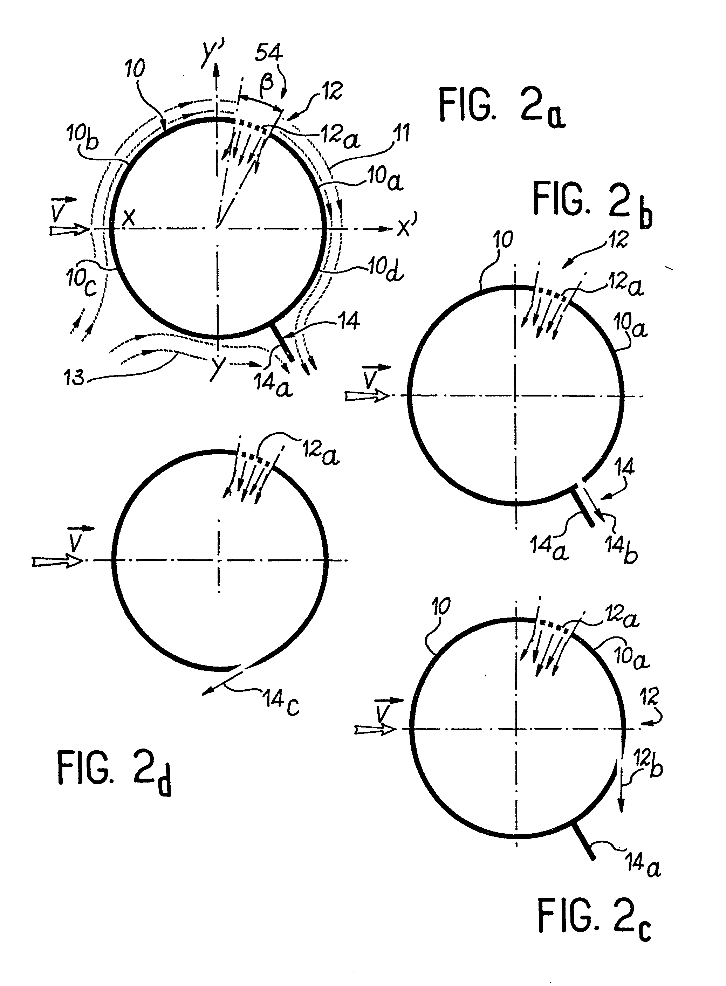

Comme on l'a déjà indiqué, l'invention consiste à placer dans un écoulement fluide animé d'une vitesse $\vec{V}$ un corps présentant en section droite dans la direction de cet écoulement un profil arrondi, très épais, symétrique et dont le bord d'attaque est allongé. Toutefois, pour simplifier l'exposé, on a représenté un corps 10 présentant un profil circulaire dans les variantes de réalisation représentées sur les figures 2a à 2d, le dispositif comprenant de plus des moyens 12 pour créer une dépression à la surface du corps 10 sur le bord de fuite de son profil circulaire, du côté 10a vers lequel on désire créer une force portante $\vec{P}$, c'est-à-dire vers le haut si l'on se réfère au schéma de la figure 1, et des moyens 14 pour séparer les écoulements fluides d'extrados 11 et d'intrados 13 (figure 2a) définis à l'extérieur du corps 10 par les moyens 12, ces moyens 14 étant également placés sur le bord de fuite, mais du côté 10d de ce dernier opposé à la force portante $\vec{P}$, c'est-à-dire vers le bas dans le cas du schéma de la figure 1. En d'autres termes, si l'on considère que la vitesse $\vec{V}$ du fluide définit un premier axe horizontal orienté XX' allant de la gauche vers la droite sur les figures 2a à 2d et si l'on considère que la force portant $\vec{P}$ que l'on désire produire définit un second axe orienté YY' orthogonal au premier et dirigé du bas vers le haut dans le cas du schéma de la figure 1, on peut définir sur le profil circulaire du corps 10 un premier quadrant 10a dans lequel se trouve créée la dépression formée par les moyens 12, un deuxième quadrant 10b, un troisième quadrant 10c qui forme avec le quadrant 10b le bord d'attaque du profil circulaire, et un quatrième quadrant 10d dans lequel se trouvent les moyens 14 pour séparer les écoulements fluides d'extrados 11 et d'intrados 13 et qui définit avec le permier quadrant 10a le bord de fuite de ce profil circulaire.

Conformément à l'invention, on a observé qu'un tel dispositif permet, pour une dépense d'énergie très minime, de produire des coefficients Cz compris entre 5 et 8.

Dans la variante de réalisation la plus économique représentée sur la figure 2a, on voit que les moyens 12 pour créer une dépression dans le premier quadrant 10a sont constitués par des moyens 12a pour aspirer le fluide vers l'intérieur du corps 10 sur une zone d'aspiration 54 définie par un angle β, alors que les moyens 14 pour séparer les écoulements fluides d'extrados 11 et d'intrados 13 sont constitués par un volet rigide 14a plan et disposé sensiblement radialement par rapport au corps 10 à l'extérieur de ce dernier. De préférence, la longueur du volet 14a est comprise entre R et R/2 si R est le rayon du bord de fuite semi-circulaire du corps 10.

Cette solution, qui permet d'obtenir un rendement énergétique optimum, est particulièrement avantageuse lorsque la zone d'aspiration 54 est comprise entre 65° et 150° par rapport à l'axe OX (O étant le centre du cercle défini en section par l'enveloppe 50 et les angles étant comptés dans le sens des aiguilles d'une montre). En pratique, la zone d'aspiration est même sensiblement plus réduite, comme l'illustre la figure 2a, cette zone étant déterminée, comme on l'a déjà mentionné, par la nécessité d'aspirer dans la partie où peut naître un décollement des filets fluides, c'est-à-dire principalement au début du bord de fuite, du côté de l'écoulement fluide d'extrados. La perméabilité de la zone 54 peut ne pas être la même partout et elle peut même éventuellement être ajustable. Elle varie de préférence entre 20 et 50 %. De plus, la zone 54 peut être constituée de deux ou plusieurs zones distinctes situées entre les angles qui viennent d'être indiqués. Cette situation est particulièrement favorable lorsque les débits d'aspiration sont faibles. De ce point de vue, il faut également mentionner que la dépression à créer à l'intérieur du corps 10 doit être au moins égale à la dépression externe, augmentée des pertes de charge au travers de la zone perméable 54. Toutefois, pour des raisons d'économie énergétique évidentes, la puissance d'aspiration est limitée à la puissance nécessaire pour aspirer la couche limite.

D'autre part, le volet 14a est de préférence incliné par rapport à l'axe OX', du côté opposé à la zone d'aspiration 54 par rapport à l'axe XX'. L'angle d'inclinaison ainsi défini par rapport à l'axe OX' est compris entre 35° et 45° lorsqu'on désire obtenir un coefficient Cz élevé et entre 15° et 25° lorsqu'on désire améliorer la valeur maximale du rapport entre les coefficients Cz et Cx. Le volet 56 est de préférence unique et il peut passer d'un côté à l'autre de l'axe XX' selon le sens que l'on désire donner à la force portante.

La variante de réalisation de la figure 2b comprend également des moyens pour former une dépression constituée par des moyens d'aspiration 12a et un volet radial plan 14a assurant la séparation des écoulements fluides d'extrados 11 et d'intrados 13. Toutefois, cette variante se distingue de la précédente par le fait qu'en plus du volet 14a, les moyens 14 pour séparer les écoulements fluides d'extrados et d'intrados comprennent des moyens représentés schématiquement par la flèche 14b pour souffler le fluide à l'extérieur du corps 10 selon une direction sensiblement radiale par rapport à ce dernier, à proximité du volet 14a et du côté de l'écoulement fluide d'extrados par rapport à ce dernier.

Dans une variante de réalisation (non représentée) le volet 14a peut être incurvé de façon à présenter sa face concave du côté de l'écoulement fluide d'extrados. Les moyens de soufflage agissent alors selon une direction sensiblement tangentielle par rapport au corps 10 et dans le sens de l'écoulement fluide d'extrados.

La variante de réalisation représentée sur la figure 2c, reprend tous les éléments de la variante représentée sur la figure 2a, les moyens 12 pour créer une dépression dans le premier quadrant 10a comprenant de plus des moyens de soufflage tangentiels 12b, représentés schématiquement par une flèche, qui agissent entre les moyens d'aspiration 12a et le volet 14a dans le sens de l'écoulement fluide d'extrados.

Selon une autre variante de réalisation (non représentée) on combine les caractéristiques des variantes de réalisation des figures 2b et 2c. De même, plusieurs moyens de soufflage tangentiels du type des moyens 12b pourraient être placés entre les moyens d'aspiration 12a et le volet 14a.

Dans une autre variante de réalisation (non représentée) on crée une dépression dans le premier quadrant 10a uniquement à l'aide de moyens de soufflage du type des moyens 12b sur la figure 2c. Bien entendu, cette variante peut se combiner avec toutes les variantes de réalisation possibles des moyens 14 pour séparer les écoulements fluides d'extrados et d'intrados.

Sur la figure 2d, on a représenté une autre variante de réalisation de l'invention selon laquelle les moyens pour séparer les écoulements fluides d'extrados et d'intrados ne comprennent pas de volet mais seulement des moyens de soufflage 14c qui agissent dans le quatrième quadrant selon une direction sensiblement tangentielle par rapport au corps 10 dans l'écoulement fluide d'extrados et dans le sens de cet écoulement. La dépression peut être obtenue par tout moyen déjà décrit, et notamment par des moyens d'aspiration 12a comme l'illustre la figure 2d.

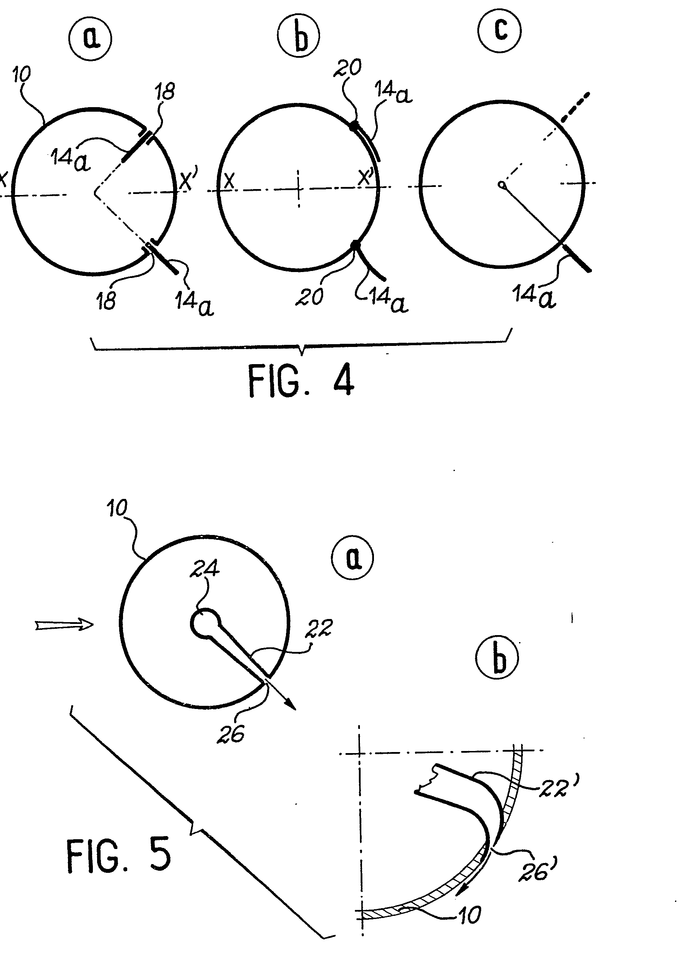

On a représenté à titre d'exemple sur les figures 3a à 3d, quatre modes de réalisation des moyens d'aspiration qui peuvent être utilisés conformément à l'invention. Rappelons que ces moyens d'aspiration doivent avoir pour effet de créer une dépression soit dans le premier quadrant 10a, soit dans le quatrième quadrant 10d, selon la direction que l'on souhaite donner à la force portante P. Ils permettent d'éviter le décollement des filets fluide à l'extrados, et limitent la formation d'un sillage.

A cet effet, on voit sur les fig. 3a et 3b que le corps 10 peut comprendre une enveloppe 10'''a perméable au fluide et une enveloppe imperméable 10'''b, cette dernière présentant sur une partie de sa circonférence une encoche 16 dont la largeur détermine l'angle d'aspiration β (voir fig. 2a). Dans le mode de réalisation de la fig. 3a, l'enveloppe perméable 10'''a est placée à l'extérieur de l'enveloppe imperméable 10'''b, alors que la situation est inversée dans le mode de réalisation de la fig. 3b. L'enveloppe perméable 10'''a est constituée par une paroi poreuse ou perforée ou par un système de maille, un grillage, des fentes, etc... La zone d'aspiration β se trouve de préférence située dans le premier quadrant mais peut accessoirement déborder dans le deuxième quadrant (au maximum de 25°). Bien entendu, la situation doit être inversée lorsqu'on souhaite inverser le sens de la force portante. A cet effet,

6

on peut prévoir de rendre orientable le cylindre imperméable au fluide 10'''b de façon à pouvoir déplacer l'encoche 16 du premier quadrant dans le quatrième quadrant.

La variante de réalisation de la fig. 3c constitue un perfectionnement des variantes de réalisation des fig. 3a et 3b autorisant un réglage de l'angle β en cours de fonctionnement. A cet effet, l'enveloppe 10b imperméable au fluide est constituée en réalité par deux enveloppes 10'b et 10''b dont l'une au moins est orientable. Ainsi, si l'enveloppe 10'b est symétrique par rapport à l'axe XX', un simple déplacement de l'enveloppe 10''b permet à la fois de moduler la largeur de l'encoche 16 et de faire passer cette encoche du premier quadrant dans le quatrième quadrant et inversement.

La variante de réalisation de la fig. 3d permet, comme on le verra ultérieurement d'orienter simultanément la zone d'aspiration et le volet au cours d'une seule opération, lorsqu'on désire changer le sens de la force portante. Le corps 10 comprend une enveloppe interne fixe 10'''b imperméable sauf au niveau des zones d'aspiration 54 et 54' et une enveloppe externe orientable 10'''a, imperméable, dont le déplacement permet d'occulter l'une ou l'autre des zones d'aspiration.

Dans une autre variante de réalisation (non représentée), la zone d'aspiration pourrait correspondre à une porte formée dans l'enveloppe du corps 10 et s'ouvrant vers l'intérieur de ce dernier.

Sur la fig. 4, on a représenté trois variantes de réalisation de volets plan ou incurvé susceptibles d'être utilisés dans les variantes de réalisation des fig. 2a à 2c. Rappelons que ce volet est placé dans le quatrième quadrant 10d pour séparer les écoulements d'extrados 11 et d'intrados 13, et dans le premier quadrant 10a quand la portance est inversée.

On voit sur la fig. 4a que le dispositif selon l'invention peut comprendre deux volets plans radiaux 14a disposés symétriquement par rapport à l'axe XX' défini par la vitesse V de déplacement du fluide. Comme on le voit sur cette figure, les volets 14a peuvent se rétracter à l'intérieur de fentes radiales 18 formées dans le corps 10 afin de s'effacer complètement par rapport au profil de ce dernier. Plus précisément, lorsque l'un des volets 14a est sorti, l'autre volet est rétracté et inversement.

La fig. 4b représente une autre variante de réalisation des volets 14a selon laquelle, comme dans la variante précédente, deux volets 14a sont placés symétriquement par rapport à l'axe XX', ces volets étant articulés sur le corps 10 selon une génératrice 20 de ce dernier de façon à pouvoir être rabattus sur le corps 10. Leur forme peut être plane ou incurvée de façon à épouser étroitement le profil du corps 10 afin de ne pas entraver la circulation du fluide. Comme dans la variante de la fig. 4a, l'un des volets 14a est rabattu sur le corps 10 alors que l'autre est placé en position active, et inversement, selon le sens que l'on désire donner à la force portante P⃗.

La fig. 4c montre une autre variante de réalisation d'un volet plan radial 14a selon laquelle un seul volet est monté sur le corps 10. Ce volet 14a est susceptible de se déplacer autour de l'axe du corps 10, de telle sorte qu'il peut être réglé angulairement et peut se déplacer entre le quatrième quadrant et le premier quadrant selon le sens que l'on désire donner à la force portante.

Si l'on rapproche la variante de réalisation de la fig. 4c de la variante de réalisation de la fig. 3d, on constate qu'il est possible de les combiner pour réaliser en une seule pièce l'enveloppe externe en arc de cercle 10'''a et le volet 14a, ce dernier étant alors placé au milieu de l'arc défini par l'enveloppe 10'''a. On conçoit qu'il est alors possible de changer le sens de la force portante en déplaçant l'ensemble 10'''a, 14a ainsi réalisé du quatrième quadrant dans le premier quadrant, ou inversement.

Bien entendu, les volets 14a peuvent être réalisés de façon différente, deux volets gonflables pouvant notamment être placés symétriquement par rapport à l'axe XX', ces volets étant gonflés alternativement selon le sens de la force portante créée par le dispositif.

Les moyens de soufflage radial 14b (fig. 2b) ou pseudo-radial agissent comme un volet fluide entre les écoulements fluides d'extrados et d'intrados tout en accélérant l'écoulement fluide d'extrados. Le soufflage tangentiel 12b, 14c (fig. 2c et 2d) ou pseudo-tangentiel entraîne les filets fluides qui ont perdu leur énergie par frottement sur la paroi du corps 10 et entraîne les autres filets fluides par effet induit.

On voit sur les fig. 5a et 5b que ces moyens de soufflage radial ou tangentiel peuvent comprendre un conduit convergent 22 alimenté à partir d'une chambre 24 à plus haute pression que celle du fluide extérieur et débouchant à l'extérieur du corps 10 par une fente 26. Bien entendu, lorsqu'il s'agit d'un soufflage radial (fig. 5a), le conduit 22 ainsi que la fente 26 présentent une symétrie radiale alors que, lorsqu'il s'agit d'obtenir un jet tangentiel, le canal 22' et la fente 26' sont incurvés comme l'illustre la fig. 5b.

On remarquera qu'un soufflage tangentiel peut également être obtenu en utilisant l'un des volets 14a représentés sur la fig. 4b, ce volet étant légèrement entrouvert afin de définir avec le corps 10 une fente au travers de laquelle peut être soufflé le fluide.

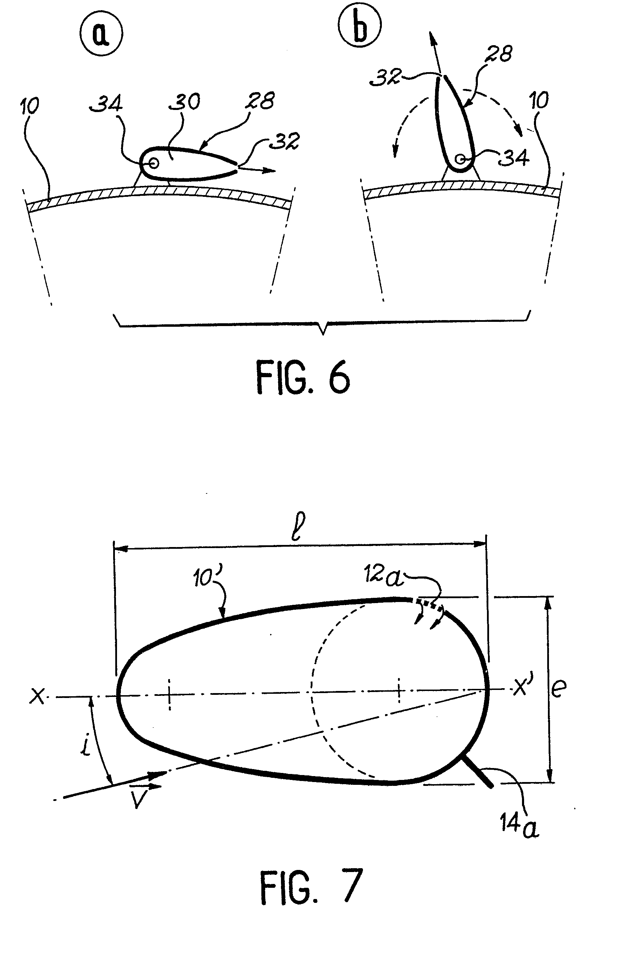

Sur les fig. 6a et 6b on a représenté une autre variante des moyens de soufflage comprenant un organe à profil creux 28 définissant à l'intérieur une chambre de surpression 30 convergeant vers une fente de sortie 32 par laquelle débouche le fluide. Cet organe creux 28 est placé à l'extérieur du corps 10 et il est de préférence orientable autour d'un axe de pivotement 34 permettant de diriger le jet tangentiellement au corps 10 (fig. 6a), radialement par rapport à ce dernier (fig. 6b) ou selon toute autre direction. Comme le montre la fig. 6a, l'organe 30 formant rampe de soufflage est placé à proximité de la surface du corps 10, mais définit un léger jeu avec ce dernier, la dimension de ce jeu étant de préférence voisine de l'épaisseur de la couche limite du fluide circulant autour du corps 10. En raison du profil convergent de l'organe 28 vers la fente 32, cette disposition a pour effet de réaliser entre cet organe 28 et

7

**0 055 638**

la surface du corps 10 un effet de trompe qui s'ajoute à l'effet produit par le soufflage pour accélérer la couche limite du fluide.

Bien entendu, le dispositif représenté sur les fig. 6a et 6b peut être combiné avec le dispositif représenté sur la fig. 4c pour permettre, en plus de l'orientation de l'organe de soufflage 28, un déplacement de ce dernier à la surface du corps 10. On conçoit que grâce à ces différentes caractéristiques, un tel organe peut remplir toutes les fonctions de soufflage apparaissant sur les variantes de réalisation des fig. 2b à 2d.

La fig. 7 montre une caractéristique essentielle de la présente invention, selon laquelle contrairement à ce qui a été représenté sur les fig. 2 à 5, le corps 10 présente en section droite un profil très épais, arrondi et symétrique par rapport à un axe XX'. De façon plus précise, on voit sur la fig. 7 que le profil de ce corps présente un bord d'attaque allongé dont l'épaisseur va en augmentant de l'avant vers l'arrière et un bord de fuite dont l'épaisseur va en diminuant de l'avant vers l'arrière, ce bord de fuite étant de préférence semi-circulaire. Si l'on appelle e l'épaisseur ou maître-couple et l la longueur ou corde du profil, on notera que le rapport e/l est de préférence compris entre 50 % et 100 %. On voit qu'en utilisant un tel profil, il est possible d'augmenter la force portante P en inclinant l'axe XX' de symétrie du profil d'un angle d'incidence i dans le sens que l'on désire donner à cette force portante par rapport à la vitesse $\vec{V}$ du fluide. De plus, la forme allongée du bord d'attaque retarde le décollement des filets fluides, ce qui permet de réduire la surface de la zone d'aspiration et, par conséquent la puissance d'aspiration.

On a représenté sur la fig. 7 le dispositif le plus économique du point de vue énergétique, qui est équipé à la fois de moyens d'aspiration 12a et d'un volet radial rigide 14a comme dans le cas de la fig. 2a. Toutefois, toutes les variantes de réalisation des fig. 2b à 2d peuvent également s'appliquer à un profil non circulaire.

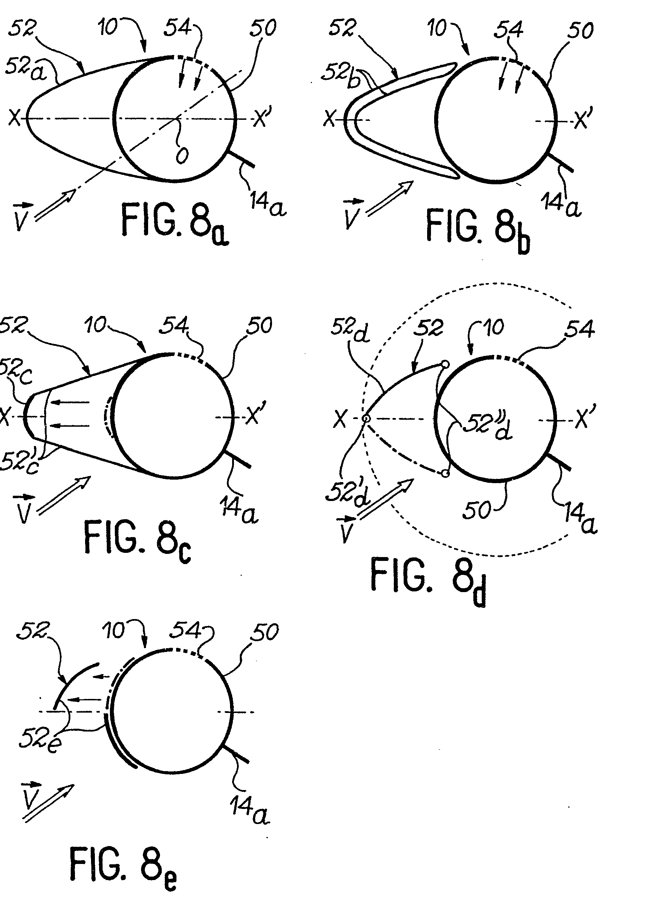

En pratique, et comme l'illustrent les fig. 8a à 8e, le profil représenté sur la fig. 7 peut être obtenu au moyen d'un corps 10 comprenant une enveloppe cylindrique rigide 50 définissant un bord de fuite sensiblement semi-circulaire et un carénage 52 définissant le bord d'attaque du profil du corps 10. Le carénage 52 peut présenter par exemple la forme d'une demi-ellipse.

Le profil allongé du bord d'attaque résultant de la présence du carénage 52 permet de réduire la dépense d'énergie nécessaire à la création d'une force portante. Ainsi, si l'angle d'incidence i défini entre la direction du fluide en mouvement tel que de l'air qui se déplace à la vitesse $\vec{V}$ et l'axe de symétrie XX' du profil du corps 10 est égal à une valeur voisine de 30 ou de 35°, la dépense d'énergie par aspiration au travers de la zone 54 de l'enveloppe cylindrique rigide 50 peut être réduite presque de moitié par rapport à un corps présentant une section totalement circulaire pour produire la même portance à égalité de surface projetée.

Cependant, la présence du carénage 52 devient gênante lorsque la vitesse d'écoulement $\vec{V}$ du fluide s'élève très au-delà de sa valeur habituelle. Une telle situation se présente notamment lorsque le dispositif selon l'invention est monté sur un bateau afin d'assurer sa propulsion. En effet, lorsqu'une tempête se produit, on conçoit que l'accroissement de la section efficace du corps 10 résultant de la présence du carénage 52 conduit à augmenter les risques de voir ce dispositif ou le bateau endommagé lors d'une tempête.

Afin de remédier à cet inconvénient, on peut soit tenir compte de ces conditions exceptionelles lors de la conception du dispositif et du bateau (carénage fixe et caractéristiques mécaniques renforcées), soit comme l'illustrent les figures 8a à 8e prévoir une possibilité d'escamotage du carénage lorsque cela s'avère nécessaire.

Ainsi, dans la variante de réalisation représentée sur la figure 8a, le carénage 52 définissant le bord d'attaque du profil du bord 10 est réalisé au moyen d'une enveloppe souple ou semi-rigide à simple paroi 52a, par exemple en toile, qui peut être gonflée ou dégonflée à volonté en injectant dans le volume compris entre l'enveloppe 52a et l'enveloppe cylindrique 50, à l'aide de moyens de pompage appropriés, un gaz sous pression tel que de l'air.

Dans la variante de réalisation de la figure 8b, le carénage 52 est réalisé au moyen d'une enveloppe souple 52b à double paroi. Cette variante se distingue essentiellement de la précédente par le fait que l'enveloppe souple 52b est préformée et que son gonflage s'effectue en injectant un gaz sous pression tel que de l'air directement entre les deux parois de l'enveloppe à l'aide de moyens de pompage appropriés.

La variante de réalisation de la figure 8c se distingue des deux variantes précédentes par le fait qu'elle n'exige pas nécessairement un gonflage de la structure définissant le carénage 52. En effet, ce carénage est réalisé au moyen d'une virole rigide 52c présentant une section en arc de cercle dont le rayon est pratiquement identique à celui de l'enveloppe cylindrique 50. La virole rigide 52c est disposée symétriquement par rapport à l'axe de symétrie XX' du profil du corps 10 et elle est susceptible de se déplacer dans la direction définie par l'axe XX', par exemple sous l'action de vérins (non représentés), entre une position de fonctionnement (représentée en trait plein sur la figure 8c) dans laquelle elle est éloignée de l'enveloppe cylindrique 50 et une position rétractée (représentée en traits mixtes) dans laquelle elle est adjacente à l'enveloppe 50. Le reste du carénage 52 est constitué par deux cloisons souples 52'c, par exemple en toile, qui sont disposées sensiblement tangentiellement à l'enveloppe cylindrique 50 pour relier celle-ci aux deux extrémités de l'arc de cercle défini en section par la virole 52c.

Afin d'améliorer le rendement aérodynamique de la variante représentée sur la figure 8c, il peut être utile de supprimer les points anguleux définis entre l'enveloppe cylindrique 50, les cloisons souples 52'c

8

et la virole rigide 52c. A cet effet, on peut prévoir un gonflage des enveloppes souples 52'c de la même manière que dans les variantes des figures 8a et 8b. Ce gonflage peut être réalisé soit en utilisant des cloisons souples 52'c à simple paroi et en injectant un gaz sous pression à l'aide de moyens de pompage appropriés dans l'espace défini entre l'enveloppe 50, les cloisons 52'c et la virole 52c, soit en utilisant des cloisons souples 52'c à double paroi et en injectant un gaz sous pression entre les deux parois de ces cloisons.

La variante de réalisation de la figure 8d se distingue des variantes précédentes par le fait que le bord d'attaque du profil du corps 10 est détaché du cylindre fixe 50 et par le fait que la forme du carénage est différente selon le sens que l'on souhaite donner à la force portante. Ainsi, le carénage 52 est constitué par un bec de toile souple ou semi-rigide 52d tendue entre deux supports 52'd et 52'd. Ces supports peuvent notamment être constitués par des mâts, des filins ou des rouleaux. Les mâts 52'd et 52"d sont parallèles entre eux et parallèles à l'axe de l'enveloppe cylindrique 50 ou légèrement inclinés par rapport à cet axe, c'est-à-dire sensiblement verticaux dans le cas où le dispositif selon l'invention est utilisé comme moyen de propulsion d'un navire. Plus précisément, le mât 52'd est disposé sur l'axe XX' du profil du corps 10 alors que le mât 52"d est décalé du côté vers lequel on souhaite créer la force portante par rapport à l'axe XX'. De plus, le mât 52"d est espacé de l'enveloppe cylindrique 50 mais beaucoup plus proche de celle-ci que le mât 52'd de telle sorte qu'un effet de fente est créé entre le bec et l'enveloppe.

Afin de permettre une inversion du sens de la force portante créée par le dispositif de la figure 8d, c'est-à-dire afin de permettre un virement de bord lorsque ce dispositif assure la propulsion d'un bateau, il est nécessaire de pouvoir disposer d'un bec souple symétrique de celui qui est représenté en trait plein sur la figure, par rapport à l'axe XX'. A cet effet, le mât 52"d peut être situé dans un plan perpendiculaire à l'axe de symétrie XX' et disposé sensiblement tangentiellement à l'enveloppe cylindrique 50. Grâce à une telle disposition, on voit qu'il est possible d'inverser le sens de la force portante en modifiant l'orientation du corps 10 pour définir un angle d'incidence i égal et opposé comme dans les autres variantes de réalisation et en déplaçant le mât 52"d jusqu'à une position symétrique par rapport à l'axe XX', de telle sorte que le bec souple 52d occupe alors la position représentée en traits mixtes sur la figure 8d.

Dans une autre variante non représentée, on peut disposer au départ de deux becs souples symétriques accrochés respectivement sur le mât 52'd et sur deux mâts 52"d symétriques par rapport à l'axe XX'. Le bec souple 52d inutilisé est alors replié tandis que l'autre est tendu.

Dans les deux cas, lorsque la vitesse du fluide en mouvement devient trop importante, le ou les becs 52d peuvent être repliés simultanément par exemple en les faisant descendre le long des mâts lorsque ces derniers sont verticaux ou par enroulement sur le rouleau 52'd. Comme on l'a représenté en traits discontinus sur la figure 8d, les mâts 52'd et 52"d peuvent être fixés ou supportés à chacune de leurs extrémités par des flasques 36 qui peuvent être disposés aux extrémités du corps 10 comme on le verra dans la suite de la description.

La variante de réalisation représentée sur la figure 8e est dérivée à la fois des variantes des figures 8c et 8d. Ainsi, sur la figure 8e, le carénage 52 comprend deux becs rigides 52e qui sont disposés chacun en totalité d'un côté de l'axe XX'. Chacun des becs 52e présente une section en arc de cercle et ses extrémités peuvent se déplacer parallèlement à l'axe XX', mais sur une distance différente, notamment sous l'action de vérins (non représentés) entre une position rétractée adjacente à la surface externe de l'enveloppe cylindrique 50 et une position de fonctionnement éloignée de cette surface et dans laquelle le bec et l'enveloppe créent un effet de fente. Comme dans le cas de la figure 8d, le bec rigide 52e situé du côté vers lequel on souhaite créer la force portante par rapport à l'axe XX' est normalement en position de fonctionnement, alors que l'autre bec rigide 52e est en position rétractée. Lorsque l'orientation du corps 10 est modifiée afin d'inverser le sens de la force portante, on conçoit que les positions occupées par chacun des becs 52e sont inversées. Bien entendu, lorsque la vitesse V du fluide en mouvement devient trop importante, les deux becs 52e sont amenés en position escamotée.

Dans une autre variante de réalisation (non représentée), le carénage définissant le bord d'attaque et la partie semi-circulaire définissant le bord de fuite du corps 10 sont réalisés de façon télescopique, de telle sorte que leur longueur est susceptible d'être réduite lors d'une augmentation excessive de la vitesse d'écoulement du fluide. Ainsi, le corps 10 peut être réalisé soit en plusieurs pièces rigides et télescopiques, soit au moins dans sa partie médiane, à l'aide d'une enveloppe souple dont la longueur peut être modifiée à volonté. La commande de la variation de longueur peut être effectuée par tout moyen connu et notamment à l'aide de treuils.

Comme sur la figure 7, on a représenté sur les figures 8a à 8d, la solution de la figure 2a selon laquelle la dépression est créée au moyen d'une zone d'aspiration 54 formée à la surface du corps 10, la séparation des écoulements fluides d'extrados et d'intrados étant réalisée au moyen d'un volet 14a qui peut être plan ou présenter toute autre forme de profil.

Les corps utilisés selon la présente invention ont nécessairement une longueur ou envergure limitée, qui est de l'ordre de six fois le diamètre dans le cas d'un corps à section circulaire. Cette limitation de la longueur a pour double effet une diminution du coefficient Cz, et donc de la portance, ainsi que l'apparition d'une résistance supplémentaire dite résistance induite, qui est directement proportionnelle au carré de ce coefficient.

Afin de réduire ces effets qui sont d'autant plus défavorables dans le cas de la présente invention que les coefficients Cz obtenus sont élevés (supérieurs à trois), il est proposé de disposer aux extrémités du

# 0 055 638

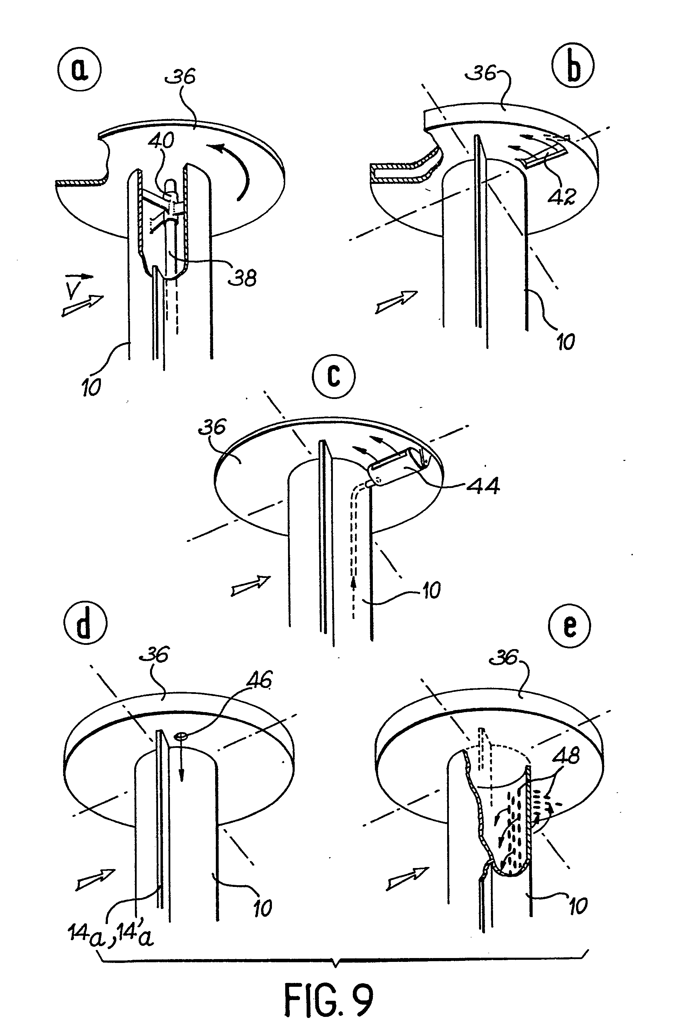

corps 10 des plaques de garde ou flasques circulaires 36 d'un diamètre supérieur à celui de ce dernier, comme l'illustrent les figures 9a à 9e. Ces flasques 36 ont pour effet d'augmenter l'allongement effectif et ainsi de diminuer la résistance induite tout en empêchant que la répartition de la force de portance ne s'annule aux extrémités du corps 10.

Toutefois, l'efficacité de ces flasques se trouve réduite par le fait que le fluide qui contourne le corps 10 à l'extrados est ralenti par frottement contre ces flasques. En vue de rétablir au niveau des extrémités du corps 10 un écoulement analogue à celui des régions médianes de ce dernier, on propose en se référant aux figures 9a à 9e différentes variantes de réalisation possibles. Sur ces figures, le corps 10 a été représenté à nouveau comme présentant en section droite un profil circulaire, afin de simplifier l'exposé.

Ainsi, dans le cas de la figure 9a, on voit que les flasques 36 sont solidaires d'un arbre 38 reçu dans des paliers 40, de sorte qu'ils sont entraînés en rotation par des moyens connus (non représentés) dans le sens de l'écoulement fluide d'extrados, à des vitesses périphériques nettement supérieures à celle de l'écoulement fluide loin à l'extérieur du corps 10.

Dans les variantes des figures 9b à 9e, les flasques 36 sont rendus solidaires du corps 10.

Ainsi, comme l'illustre la figure 9b, le même effet peut être obtenu en effectuant à partir de chacun des flasques 36 et au travers d'une fente radiale 42 un soufflage tangentiel par rapport aux flasques, du côté du corps 10. Comme le soufflage tangentiel 12b sur la figure 2c, ce soufflage est effectué dans le sens de l'écoulement fluide d'extrados et à l'intérieur de cet écoulement.

La variante de réalisation de la figure 9c concerne le cas où le soufflage tangentiel est effectué au moyen d'un organe 44 porté par le flasque 36 et disposé radialement par rapport à ce dernier, l'organe 44 présentant un profil creux comparable à celui de l'organe 28 décrit en se référant aux figures 6a et 6b.

Au lieu d'effectuer un soufflage tangentiel par rapport aux flasques 36, on peut aussi comme l'illustre la figure 9d effectuer un soufflage sous forme de jet selon une direction normale par rapport aux flasques 36 et en direction du corps 10, au travers d'une ouverture 46 formée dans chacun des flasques 36. De préférence, ce soufflage est effectué dans l'écoulement fluide d'extrados à proximité du volet 14a afin d'être particulièrement efficace.

Enfin, on voit sur la figure 9e que l'amélioration de l'écoulement du fluide le long des flasques 36 peut aussi être obtenue par aspiration du fluide circulant autour du corps 10 au travers d'ouvertures 48 ou de tout autre système perméable approprié formé dans le flasque 36. De préférence, ces ouvertures 48 sont alignées avec la zone d'aspiration β (figure 2a) prévue dans le corps 10.

Bien entendu, les différentes solutions représentées sur les figures 9b à 9e peuvent éventuellement être combinées.

Comme on l'a déjà mentionné, bien que le corps 10 ait été représenté sur les figures 9a à 9e comme présentant en section droite un profil circulaire, il va de soi que ces différentes solutions s'appliquent en réalité à un profil du type de celui de la figure 7 et des figures 8a à 8e.

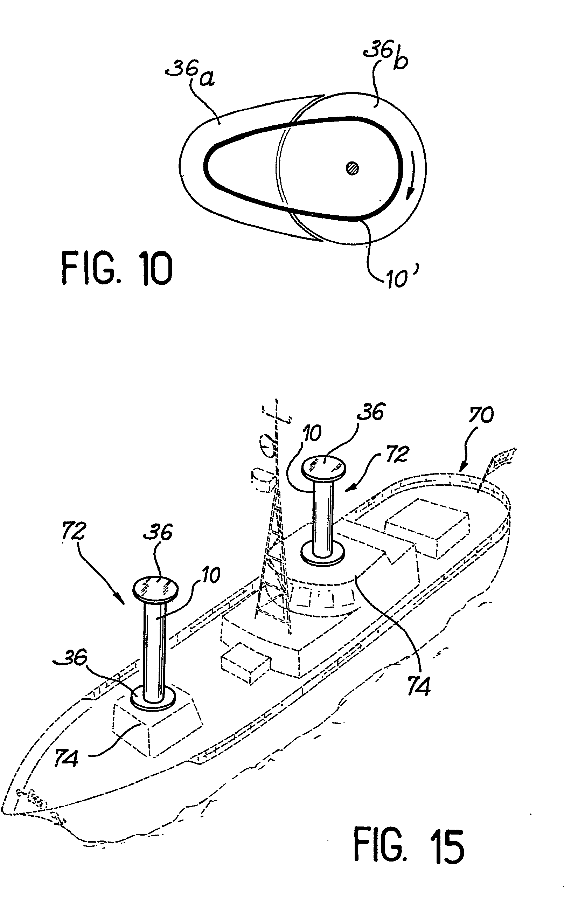

Cela signifie que la forme du flasque est adaptée à la forme du profil de telle sorte que le flasque dépasse sur une largeur donnée tout autour du profil. Dans le cas du flasque tournant représenté sur la figure 9a, on remarquera simplement comme l'illustre la figure 10 que le flasque 36 doit en réalité être réalisé en au moins deux parties 36a et 36b, ces parties étant complémentaires. Seule la partie 36b qui présente une configuration circulaire et qui est placée du côté du bord de fuite est entraînée en rotation.

Bien entendu, les moyens d'aspiration et de soufflage décrits précédemment aussi bien au niveau du corps 10 qu'au niveau des flasques 36 peuvent être déterminés avantageusement de telle sorte que le débit d'aspiration soit égal au débit de soufflage, ce qui permet d'utiliser une seule machine aspirante-soufflante pour l'ensemble du dispositif. Ainsi, et de façon non limitative, on pourra combiner avantageusement la variante de réalisation de la figure 2a utilisant uniquement des moyens d'aspiration avec l'une des variantes de réalisation des figures 9b et 9d utilisant des moyens de soufflage.

A ce propos, on a observé que l'énergie dépensée lors du soufflage du fluide à l'extérieur qu'implique nécessairement une aspiration du fluide à l'intérieur du corps, est préjudiciable au rendement énergétique du dispositif, même si elle est effectuée dans des conditions aérodynamiques favorables. On peut remarquer de ce point de vue que l'épaisseur relativement importante du profil du corps 10 permet de définir à l'intérieur du corps une grande chambre de dépression contribuant à réduire la perte de charge et en conséquence, à réduire la dépense énergétique. De plus, on a étudié différentes configurations permettant de réduire autant que possible la perte de charge intervenant lors du soufflage.

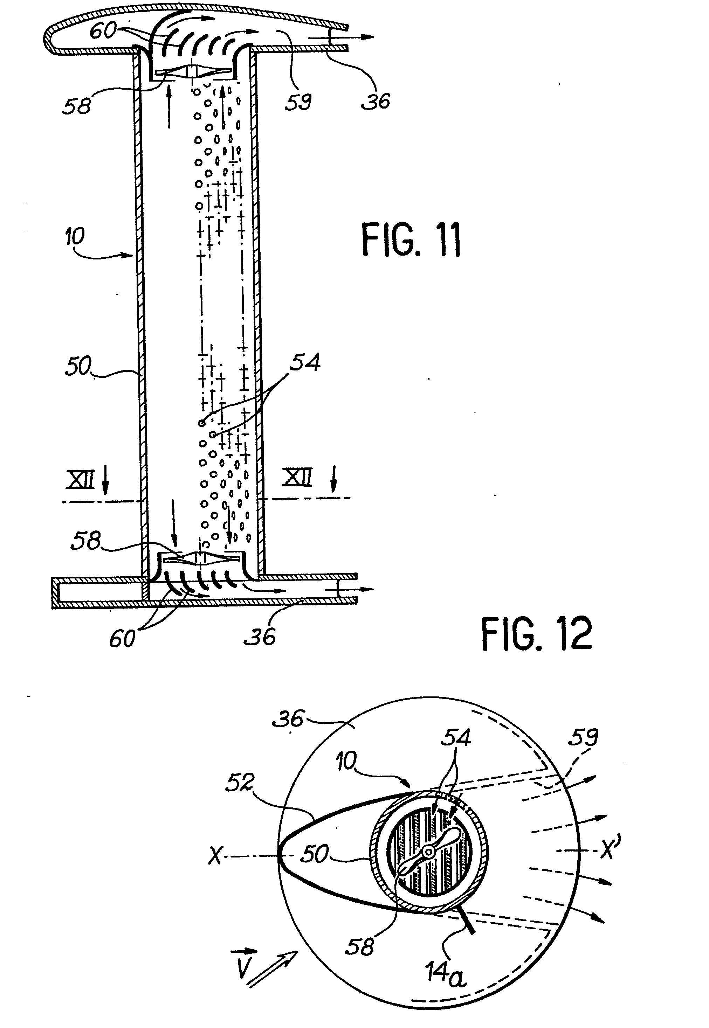

Ainsi, on a représenté sur les figures 11 et 12 un premier mode de réalisation du dispositif selon l'invention. Afin de simplifier l'exposé, les carénages qui ont été décrits en se référant aux figures 8a à 8e ne sont pas représentés sur les figures 11 et 12, mais on comprendra aisément que toutes les variantes décrites en se référant aux figures 8a à 8e peuvent s'appliquer à ce mode de réalisation.

Comme le montrent les figures 11 et 12, l'enveloppe cylindrique creuse 50 du corps 10 comprend, au voisinage de chacune de ses exttrémités, un ventilateur 58 qui aspire le fluide extérieur tel que de l'air au travers de la zone d'aspiration 54 représentée schématiquement par des trous sur la fig. 3, pour le rejeter à l'intérieur des flasques 36 qui présentent à cet effet une configuration à double paroi. Comme le montre en particulier la fig. 12, le fluide introduit dans chacun des flasques 36 par les ventilateurs 58 est rejeté vers l'extérieur par une ouverture 59 en arc de cercle formée à la périphérie de chacun des flasques, de préférence du côté du bord de fuite. Dans une variante non représentée, les flasques pourraient être montés tournants afin de permettre une orientation de la zone de soufflage. Bien entendu, afin de limiter au maximum la perte de charge intervenant au niveau de l'éjection du fluide à la périphérie des flasques, la section de passage à l'intérieur de ce dernier est relativement importante et on prévoit au niveau de la liaison entre le corps 10 et les flasques 36 des déflecteurs 60.

Dans une variante de réalisation non représentée, on peut prévoir un ventilateur à une seule des extrémités de l'enveloppe 50. De plus, chaque ventilateur peut être remplacé par un groupe de ventilateurs.

Afin de tenir compte du caractère variable de la force d'aspiration le long du corps 10 résultant de la disposition des ventilateurs 58 aux extrémités de ce dernier, on conçoit qu'il est possible de moduler la perméabilité de la zone 54, ou de prévoir un système d'aubages ou tout système équivalent à l'intérieur du corps 10. Ainsi la perméabilité de la zone 54 peut être plus importante dans les parties éloignées des ventilateurs 58, c'est-à-dire au milieu du corps 10, que dans les parties proches des ventilateurs, c'est-à-dire à proximité des extrémités du corps 10.

Bien que le mode de réalisation des fig. 11 et 12 puisse être utilisé avec tous les types de carénage décrits précédemment, on conçoit qu'il est particulièrement adapté à la variante non représentée selon laquelle le corps 10 est télescopique, puisque le positionnement des ventilateurs aux extrémités du corps 10 autorise une diminution de la longueur de ce corps dans l'ensemble de la zone intermédiaire comprise entre les ventilateurs.

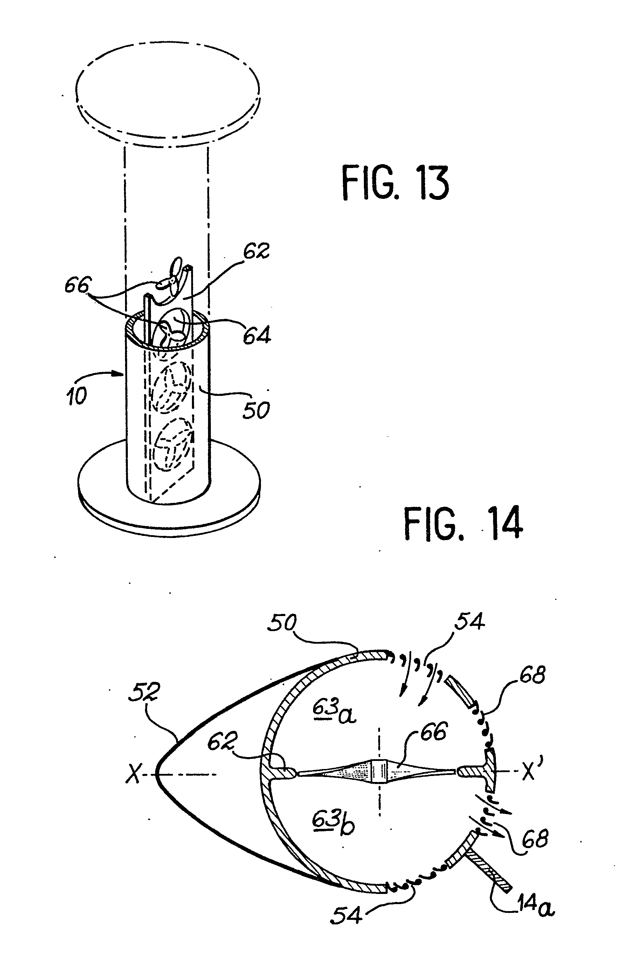

Dans le mode de réalisation des fig. 13 et 14, l'intérieur de l'enveloppe constituant le corps 10 est séparé en deux compartiments 63a, 63b dans le sens de la longueur par une cloison plane 62 disposée radialement dans le plan défini par l'axe XX'. La cloison 62 présente sur toute sa longueur des ouvertures circulaires 64 dans lesquelles sont logés des ventilateurs 66 dont les axes sont parallèles entre eux et coupent l'axe de la partie cylindrique 50 du corps 10 selon une direction perpendiculaire à l'axe de symétrie XX' du profil de ce dernier. Cette caractéristique apparaît clairement sur la fig. 14 sur laquelle on a représenté de plus le carénage 52 qui peut notamment être réalisé selon l'une quelconque des variantes représentées sur les fig. 8a à 8e. Par souci de clarté, ce carénage 52 n'a pas été représenté sur la fig. 13.

On voit que les compartiments 63a et 63b ainsi définis à l'intérieur de l'enveloppe cylindrique 50 constituent alternativement des compartiments d'aspiration et de soufflage selon que les ventilateurs 66 tournent dans un sens ou dans l'autre. Dans cette configuration, il est donc nécessaire d'adjoindre à la zone d'aspiration 54 une zone de soufflage 68 et de placer ces deux zones sur le cylindre 50, de part et d'autre de la cloison 62. Comme on l'a indiqué précédemment, la zone de soufflage 68 est disposée de préférence dans l'écoulement fluide d'extrados et à proximité du volet 14a. De plus, afin de limiter la perte de charge au niveau de la zone de soufflage 68 qui conduit à une augmentation peu satisfaisante de la dépense énergétique, on donne à la zone de soufflage 68 une section aussi grande que possible tout en tenant compte des caractéristiques d'écoulement du fluide souhaitées.

Afin de permettre une inversion du sens de la force portante ainsi créée, on conçoit qu'il est nécessaire de prévoir une possibilité d'inverser le sens de rotation des ventilateurs 66. De plus, une zone d'aspiration et une zone de soufflage doivent être prévues de chaque côté de la cloison 62. Enfin, des moyens doivent être prévus pour occulter alternativement une zone d'aspiration et une zone de soufflage de part et d'autre de la cloison 62. A cet effet, on voit sur la fig. 14 qu'il est possible de réaliser les zones d'aspiration 54 au moyen de panneaux articulés s'ouvrant vers l'intérieur du cylindre fixe 50 et de réaliser les zones de soufflage 68 au moyen de panneaux articulés s'ouvrant vers l'extérieur du cylindre 50. Ainsi, selon le sens de rotation des ventilateurs 66, la dépression qui se crée dans le compartiment 63a ou dans le compartiment 63b a pour effet d'ouvrir les panneaux articulés de la zone d'aspiration 54 correspondante et de fermer les panneaux articulés de la zone de soufflage 68 correspondante, tandis que la surpression induite dans le compartiment 63b ou 63a, respectivement a pour effet de fermer les panneaux articulés de la zone d'aspiration 54 correspondante et d'ouvrir les panneaux articulés de la zone de soufflage 68 correspondante. Bien entendu, l'ouverture et la fermeture des zones d'aspiration et de soufflage pourraient également être obtenues par tout autre moyen et notamment à l'aide de viroles tournantes comme on l'a décrit en se référant aux fig. 3a à 3c et comme cela peut être le cas dans le mode de réalisation des fig. 11 et 12.

Dans une variante de réalisation non représentée, les zones d'aspiration et de soufflage disposées de part et d'autre de la cloison 62 pourraient constituer une zone unique servant alternativement à l'aspiration et au soufflage, selon le sens de fonctionnement des ventilateurs.

Comme on l'a déjà indiqué, le dispositif selon l'invention peut être utilisé aussi bien pour commander le déplacement d'un mobile tel qu'un navire que pour créer de l'énergie notamment électrique en l'utilisant pour entraîner un alternateur.

A titre d'illustration, on a représenté sur la fig. 15 un bateau 70 équipé de deux dispositifs 72 réalisés conformément à l'invention. Sur la fig. 15, ces dispositifs sont constitués par des cylindres à axe vertical constituant les corps 10, ces cylindres étant munis à chacune de leurs extrémités d'un flasque 36. Bien entendu, conformément à l'invention, chaque cylindre est équipé d'un carénage du côté du bord d'attaque, mais ce carénage n'a pas été représenté afin de simplifier l'exposé. On notera aussi que les dispositifs 72 sont placés de préférence sur une plate-forme 74 qui porte les systèmes représentés sur les fig. 9a à 9e associés aux flasques inférieurs 36. De plus, cette plate-forme 74 permet aux dispositifs 72 de bénéficier d'un effet d'image qui double pratiquement l'allongement géométrique des corps 10, ce qui permet de réduire d'autant la résistance induite.

Bien entendu, dans une telle application comme dans la plupart des autres applications, il est utile de prévoir des moyens permettant de détecter l'orientation du vent ou de tout autre fluide dont on utilise le déplacement, ces moyens de détection agissant de façon connue en soi par l'intermédiaire d'un asservissement pour orienter l'axe XX' du corps 10 selon la direction du fluide en déplacement lorsque ce corps présente en section droite un profil circulaire, ou selon un angle d'incidence i donné par rapport à cette direction lorsque son profil est plus complexe comme l'illustre notamment la figure 7.

Afin d'illustrer l'application des dispositifs selon l'invention à la production d'énergie, on indiquera à titre d'exemple qu'il est possible de placer plusieurs dispositifs du type décrit et revendiqué soit verticalement, soit horizontalement les uns à la suite des autres dans un endroit venté, de façon à former un circuit fermé le long duquel les dispositifs se déplacent sous l'action du vent pour entraîner un générateur et produire du courant électrique. Il est également possible d'utiliser ce dispositif pour constituer l'élément unique d'une éolienne bipale à axe horizontal. La rotation du dispositif autour de cet axe à la manière d'une pale qui résulte de la création d'une force portante dans le sens correspondant à cette rotation peut aussi être utilisée pour entraîner directement un générateur. Dans ce cas, la mise en rotation du dispositif formant pale intervient automatiquement grâce au vrillage du volet et l'air est aspiré à l'intérieur sous l'effet de la force centrifuge et rejeté vers ses extrémités périphériques. Tenant compte de la valeur élevée de la force portante créée par un tel dispositif, on conçoit aisément que cette éolienne à élément unique permet d'obtenir un effet comparable à celui d'une éolienne classique multipales. Enfin, dans le même ordre d'idées, le dispositif selon l'invention pourrait également être utilisé pour remplacer les pales ou aubes classiques de propulseurs ou machines tournantes de types très divers.

On comprendra que le profil du corps 10 peut varier d'une extrémité à l'autre de celui-ci. De même, la localisation des différents systèmes que constituent les moyens d'aspiration, les moyens de soufflage et les volets peut être différente et réglable d'une extrémité à l'autre du corps 10. A cet effet, ce corps peut notamment être divisé en plusieurs tronçons pouvant être orientés indépendamment les uns des autres. Les volets peuvent également être réalisés à l'aide d'un matériau souple pouvant occuper des positions différentes d'une extrémité à l'autre du corps 10.

## Revendications

1. Dispositif destiné à être placé dans un fluide en mouvement selon une première direction $(\vec{V})$ afin de produire une force portante $(\vec{P})$ selon une deuxième direction transversale par rapport à cette première direction, ce dispositif comprenant un corps allongé (10) présentant en section droite selon la première direction un profil arrondi, des moyens (12) pour aspirer le fluide à l'intérieur du corps dans une zone d'aspiration (54) située au moins sur le bord de fuite du profil sur un premier côté (10a) sur lequel ladite force portante doit être produite et un volet (14a, 14'a) faisant saillie par rapport au corps (10), sur le bord de fuite du profil, du côté (10d) opposé à la deuxième direction, caractérisé en ce que ledit profil comporte un bord d'attaque allongé suivant une loi pseudo-elliptique et un bord de fuite suivant une loi semi-circulaire, ce profil étant symétrique par rapport à un axe de symétrie unique (XX') définissant avec la première direction $(\vec{V})$ un angle d'incidence (i) orienté selon la deuxième direction, l'épaisseur maximum (e) du profil étant comprise entre 50 % et 100 % de sa longueur (1) dans le sens défini par son axe de symétrie.

2. Dispositif selon la revendication 1, caractérisé en ce qu'il comprend de plus des moyens pour orienter l'axe de symétrie (XX') défini par le profil du corps selon un angle d'incidence (i) donné par rapport à la première direction $(\vec{V})$.

3. Dispositif selon l'une quelconque des revendications 1 et 2, caractérisé en ce que la longueur du volet (14a) est comprise entre le rayon (R) du bord de fuite semi-circulaire et la moitié de ce rayon.

4. Dispositif selon l'une quelconque des revendications 1 à 3, caractérisé en ce que le corps (10) présente au moins une partie escamotable (52a-52e) au niveau de son bord d'attaque allongé.

5. Dispositif selon la revendication 4, caractérisé en ce que le corps (10) comprend au moins une enveloppe cylindrique rigide (50) définissant le bord de fuite et un carénage escamotable (52) définissant le bord d'attaque.

6. Dispositif selon la revendication 5, caractérisé en ce que le carénage (52) comprend une enveloppe souple ou semi-rigide et gonflable (52a, 52b) disposée à l'extérieur de l'enveloppe cylindrique (50).

7. Dispositif selon la revendication 6, caractérisé en ce que l'enveloppe souple (52a) est à simple paroi et en ce que des moyens sont prévus pour introduire un gaz sous pression dans le volume séparant l'enveloppe souple (52a) de l'enveloppe cylindrique rigide (50).

8. Dispositif selon la revendication 6, caractérisé en ce que l'enveloppe souple (52b) est à double paroi et préformée et en ce que des moyens sont prévus pour introduire un gaz sous pression dans le volume séparant les deux parois de l'enveloppe souple (52b).

9. Dispositif selon la revendication 5, caractérisé en ce que le carénage (52) comprend une virole rigide (52c) présentant une section en arc de cercle et disposée symétriquement par rapport à l'axe de symétrie (XX') à l'extérieur de l'enveloppe cylindrique rigide (50) et deux cloisons souples ou semi-rigides (52'c) reliant la virole rigide à l'enveloppe cylindrique et en ce que des moyens sont prévus pour déplacer la virole rigide (52c) selon la direction définie par l'axe de symétrie (XX') entre une position de fonctionnement dans laquelle la virole est éloignée de l'enveloppe cylindrique et une position rétractée dans laquelle la virole est adjacente à l'enveloppe cylindrique.

10. Dispositif selon la revendication 9, caractérisé en ce que les cloisons souples (52'c) sont à simple paroi et en ce que des moyens sont prévus pour introduire un gaz sous pression dans le volume séparant l'enveloppe cylindrique (50), la virole rigide (52c) et les cloisons souples (52'c).

11. Dispositif selon la revendication 9, caractérisé en ce que les cloisons souples (52'c) sont à double paroi et préformées et en ce que des moyens sont prévus pour introduire un gaz sous pression dans le volume séparant les deux parois des enveloppes souples.

12. Dispositif selon la revendication 5, caractérisé en ce que le carénage (52) comprend au moins un bec souple (52d) disposé à l'extérieur de l'enveloppe cylindrique (50) entre un premier support (52'd) sensiblement parallèle à l'axe de cette dernière et passant par l'axe de symétrie (XX') et un deuxième support (52"d) sensiblement parallèle au premier et placé du côté (10d) défini par la deuxième direction à une distance donnée de l'enveloppe cylindrique, de telle sorte que le bec souple définit le bord d'attaque du profil du corps (10) et provoque un effet de fente avec l'enveloppe cylindrique (50).

13. Dispositif selon la revendication 12, caractérisé en ce que le deuxième support (52"d) est mobile et peut se déplacer d'un côté à l'autre de l'axe de symétrie (XX') dans un plan perpendiculaire à ce dernier et sensiblement tangent à l'enveloppe cylindrique (50), selon ladite deuxième direction.

14. Dispositif selon l'une quelconque des revendications 12 et 13, caractérisé en ce que des moyens sont prévus pour déplacer l'une au moins des extrémités du bec souple (52d) par rapport aux supports (52'd, 52"d), afin de permettre de diminuer la surface de ce bec.

15. Dispositif selon la revendication 12, caractérisé en ce que le carénage comprend deux becs souples disposés symétriquement par rapport à l'axe de symétrie (XX') entre le premier support (52'd) et deux deuxièmes supports (52"d) symétriques par rapport à cet axe.

16. Dispositif selon la revendication 4, caractérisé en ce que le carénage (52) comprend deux becs rigides (52c) présentant une section en arc de cercle et disposés de part et d'autre de l'axe de symétrie (XX') du profil à l'extérieur de l'enveloppe cylindrique rigide (50) et en ce que des moyens sont prévus pour déplacer alternativement chacun des becs rigides selon la direction définie par l'axe de symétrie (XX') entre une position de fonctionnement dans laquelle le bec est éloigné de l'enveloppe cylindrique et une position rétractée dans laquelle le bec est adjacent à l'enveloppe cylindrique, ces moyens agissant de façon à placer le bec rigide situé du côté correspondant à la deuxième direction en position de fonctionnement et l'autre bec rigide en position rétractée.

17. Dispositif selon la revendication 4, caractérisé en ce que le corps (10) comprend une enveloppe télescopique sur une partie au moins de sa longueur et en ce que des moyens sont prévus pour déplacer l'une au moins des extrémités du corps (10) par rapport à l'autre extrémité de ce corps.

18. Dispositif selon la revendication 17, caractérisé en ce que le corps (10) comprend au moins une enveloppe intérieur et une enveloppe extérieure, au moins l'une (10'b, 10"b, 10'''b) desdites enveloppes étant imperméable au fluide et orientale et présentant en section une encoche (16) déterminant la zone d'aspiration, alors que l'autre enveloppe (10'''a) est perméable au fluide.

19. Dispositif selon la revendication 18, caractérisé en ce que le corps (10) comprend deux enveloppes (10'b, 10"b) imperméables au fluide et orientables indépendamment l'une de l'autre, de façon à permettre le réglage de la largeur de ladite encoche (16).

20. Dispositif selon la revendication 18, caractérisé en ce que le corps (10) comprend une enveloppe imperméable (10'''b) définissant deux zones d'aspiration perméables (54, 54') symétriques par rapport à l'axe du profil, et une enveloppe imperméable en arc de cercle (10'''a) orientable pour venir occulter l'une ou l'autre des zones d'aspiration.

21. Dispositif selon l'une quelconque des revendications précédentes, caractérisé en ce que le corps (10) comprend au moins une enveloppe imperméable munie de portes s'ouvrant vers l'intérieur pour définir les zones d'aspiration.

22. Dispositif selon l'une quelconque des revendications précédentes, caractérisé en ce qu'il comprend deux volets (14a, 14'a) rigides et mobiles par rapport au corps de façon à pouvoir occuper de plus une position inactive dans laquelle ils ne modifient pas le profil du corps, ces deux volets étant placés symétriquement par rapport à l'axe (XX') du profil, de telle sorte que l'un est en position inactive lorsque l'autre est disposé en saillie par rapport au corps, et inversement, selon le côté du profil sur lequel ladite force portante doit être produite.

23. Dispositif selon la revendication 22, caractérisé en ce que les volets (14a) sont sensiblement plans, disposés radialement par rapport au corps (10) et rétractables par coulissement selon ce plan dans des fentes (18) formées dans le corps.

24. Dispositif selon l'une quelconque des revendications précédentes, caractérisé en ce qu'il comprend deux volets gonflables placés symétriquement par rapport à l'axe du profil, de telle sorte que l'un est dégonflé lorsque l'autre est gonflé, et inversement selon le côté du profil sur lequel ladite force portante doit être produite.

25. Dispositif selon l'une quelconque des revendications précédentes, caractérisé en ce qu'il

**0 055 638**

comprend un seul volet (14a) rigide sensiblement plan, disposé radialement par rapport au corps et mobile par rapport à ce dernier de façon à pouvoir se déplacer d'un côté à l'autre de l'axe de symétrie (XX') du profil, sur le bord de fuite de ce dernier, selon le côté du profil sur lequel ladite force portante doit être produite.

26. Dispositif selon la revendication 22, caractérisé en ce que les volets (14'a) sont rabattables sur le corps (10) pour venir épouser le profil de ce dernier.

27. Dispositif selon l'une quelconque des revendications précédentes, caractérisé en ce qu'un fflasque (36) est monté à chacune des extrémités du corps (10).

28. Dispositif selon la revendication 27, caractérisé en ce que chacun des flasques (36) comprend au moins une partie circulaire (36b) et en ce que des moyens sont prévus pour faire tourner cette partie dans le sens de l'écoulement fluide d'extrados (11).

29. Dispositif selon la revendication 27, caractérisé en ce que chacun des flasques (36) est solidaire du corps (10) et comprend, du côté de ce dernier, des moyens (48) d'aspiration du fluide vers l'intérieure du corps, dont le centre est placé du côté du bord de fuite du profil déterminé par la deuxième direction.

30. Dispositif selon l'une quelconque des revendications 27 à 29, caractérisé en ce qu'au moins un ventilateur (58) dont l'axe est parallèle à l'axe longitudinal du corps (10) est placé à l'intérieur de ce dernier, à proximité de l'une au moins de ses extrémités, pour aspirer le fluide vers l'intérieur du corps par la zone d'aspiration (54) sur toute la distance qui les sépare et souffler ce fluide vers l'extérieur au travers de l'un au moins des flasques (36).

31. Dispositif selon la revendication 30, caractérisé en ce que le ventilateur (58) souffle le fluide par au moins une ouverture (59) en arc de cercle formée à la périphérie du flasque (36) correspondant.

32. Dispositif destiné à être placé dans un fluide en mouvement selon une première direction $(\vec{V})$ afin de produire une force portante $(\vec{P})$ selon une deuxième direction transversale par rapport à la première direction, ce dispositif comprenant un corps allongé (10) présentant en section droite selon la première direction un profil arrondi, des moyens (12) pour aspirer le fluide à l'intérieur du corps dans une zone d'aspiration perméable (54) située au moins sur le bord de fuite du profil, et un volet rigide (14a), sensiblement plan, faisant saillie par rapport au corps (10) et situé sur le bord de fuite du profil, du côté opposé au côté sur lequel ladite force portante doit être produite, ledit volet (14a) étant orientable par rapport au corps (10) pour permettre une inversion de la force portante, ledit profil définissant un bord d'attaque dont l'épaisseur va en croissant de l'avant vers l'arrière et un bord de fuite arrondi dont l'épaisseur décroît de l'avant vers l'arrière, caractérisé en ce que ledit profil est symétrique par rapport à un axe de symétrie unique définissant avec la première direction un angle d'incidence (i) orienté selon la deuxième direction, le bord d'attaque dudit profil étant allongé, l'épaisseur maximum (e) du profil étant comprise entre 50 % et 100 % de sa longueur (I) dans le sens défini par son axe de symétrie, ledit corps allongé (10) comprenant une enveloppe imperméable (10'''b) comportant deux zones d'aspiration perméables (54, 54') disposées symétriquement par rapport audit axe de symétrie (XX') et une enveloppe imperméable (10'''a) orientable afin d'occulter l'une des zones d'aspiration située sur un côté du profil opposé au côté sur lequel ladite force portante doit être produite, le volet (14a) étant porté par ladite enveloppe imperméable orientable (10'''a) afin de former avec cette dernière une seule pièce orientable dont le déplacement d'un côté à l'autre du profil permet d'inverser la direction de la force portante.

### Claims

1. A device adapted to be placed in a fluid in movement in a first direction $(\vec{V})$ in order to produce a carrying force $(\vec{P})$ in a second direction transversely of the first direction, the device comprising an elongate body (10) having a rounded profile in cross-section in the first direction, means (12) for intaking the fluid into the body in an intake zone (54) situated at least on the trailing edge of the profile on a first side (10a) on which the said carrying force is to be produced and a flap (14a, 14'a) projecting from the body (10) on the trailing edge of the profile on the opposite side (10d) to the second direction, characterised in that the said profile has an elongate leading edge in accordance with a pseudo-elliptical law and a trailing edge in accordance with a semi-circular law, said profile being symmetrical with respect to a single axis of symmetry (XX') which together with the first direction $(\vec{V})$ defines an angle of incidence (i) directed in the second direction, the maximum thickness (e) of the profile being between 50 % and 100 % of its length (1) in the direction defined by its axis of symmetry.

2. A device according to claim 1, characterised in that it further comprises means for orienting the axis of symmetry (XX') defined by the profile of the body along a given angle of incidence (i) with respect to the first direction $(\vec{V})$.

3. A device according to claim 1 or 2, characterised in that the length of the flap (14a) is contained between the radius (R) of the semi-circular trailing edge and half said radius.

4. A device according to any one of claims 1 to 3, characterised in that the body (10) has at least one retractable part (52a-52e) at its elongate leading edge.

5. A device according to claim 4, characterised in that the body (10) comprises at least one rigid cylindrical envelope (50) defining the trailing edge and a retractable fairing (52) defining the leading edge.

14

6. A device according to claim 5, characterised in that the fairing (52) comprises a flexible or semi-rigid inflatable envelope (52a, 52b) disposed outside the cylindrical envelope (50).

7. A device according to claim 6, characterised in that the flexible envelope (52a) is single-walled and in that means are provided to introduce a gas under pressure into the volume between the flexible envelope (52a) and the rigid cylindrical envelope (50).

8. A device according to claim 6, characterised in that the flexible envelope (52b) is double-walled and pre-formed and in that means are provided to introduce a gas under pressure into the volume between the two walls of the flexible envelope (52b).

9. A device according to claim 5, characterised in that the fairing (52) comprises a rigid bush (52c) having an arcuate section and disposed symmetrically with respect to the axis of symmetry (XX') outside the rigid cylindrical envelope (50) and two flexible or semi-rigid partitions (52'c) connecting the rigid bush to the cylindrica envelope and in that means are provided to move the rigid bush (52c) in the direction defined by the axis of symmetry (XX') between an operating position in which the bush is distant from the cylindrical envelope and a retracted position in which the bush is adjacent the cylindrical envelope.

10. A device according to claim 9, characterised in that the flexible partitions (52'C) are single-walled and in that means are provided to introduce a gas under pressure into the volume between the cylindrical envelope (50), the rigid bush (52c) and the flexible partitions (52'c).

11. A device according to claim 9, characterised in that the flexible partitions (52'c) are double-walled and pre-formed and in that means are provided to introduce a gas under pressure into the volume between the two walls of the flexible envelopes.

12. A device according to claim 5, characterised in that the fairing (52) comprises at least one flexible lip (52d) disposed outside the cylindrical envelope (50) between a first support (52'd) substantially parallel to the axis of the latter and passing through the axis of symmetry (XX') and a second support (52"d) substantially parallel to the first support and disposed on the side (10d) defined by the second direction at a given distance from the cylindrical envelope in such manner that the flexible lip defines the leading edge of the profile of the body (10) and together with the cylindrical envelope (50) produces a slit effect.

13. A device according to claim 12, characterised in that the second support (52"d) is movable and can travel from one side of the axis of symmetry (XX') to the other in a plane perpendicular to the latter and substantially tangential to the cylindrical envelope (50) in the said second direction.

14. A device according to claim 12 or 13, characterised in that means are provided to move at least one of the ends of the flexible lip (52d) with respect to the supports (52'd, 52"d) in order to enable the area of said lip to be reduced.

15. A device according to claim 12, characterised in that the fairing comprises two flexible lips disposed symmetrically with respect to the axis of symmetry (XX') between the first support (52'd) and two second supports (52"d) symmetrical with respect to said axis.

16. A device according to claim 4, characterised in that the fairing (52) comprises two rigid lips (52c) of arcuate section disposed on either side of the axis of symmetry (XX') of the profile outside the rigid cylindrical envelope (50) and in that means are provided alternately to move each of the rigid lips in the direction defined by the axis of symmetry (XX') between an operating position in which the lip is distant from the cylindrical envelope and a retracted position in which the lip is adjacent the cylindrical envelope, said means so acting as to place the rigid lip situated on the side corresponding to the second direction in the operating position and the other rigid lip in the retracted position.

17. A device according to claim 4, characterised in that the body (10) comprises an envelope which is telescopic over at least part of its length and in that means are provided to move at least one of the ends of the body (10) with respect to the other end of said body.

18. A device according to claim 17, characterised in that the body (10) comprises at least one inner envelope and an outer envelope, one at least (10'b, 10"b, 10'''b) of said envelopes being impermeable to the fluid and orientable and having in section a notch (16) defining the intake zone while the other envelope (10'''a) is permeable to the fluid.

19. A device according to claim 18, characterised in that the body (10) comprises two envelopes (10'b, 10"b) which are impermeable to the fluid and are orientable independently of one another so as to allow the width of said notch (16) to be regulated.

20. A device according to claim 18, characterised in that the body (10) comprises an impermeable envelope (10'''b) defining two permeable intake zones (54, 54') which are symmetrical with respect to the axis of the profile, and an arcuate impermeable envelope (10'''a) which is orientable to close one or other of the intake zones.

21. A device according to any one of the preceding claims, characterised in that the body (10) comprises at least one impermeable envelope provided with doors opening inwards to define the intake zones.

22. A device according to any one of the preceding claims, characterised in that it comprises two rigid flaps (14a, 14'a) which are movable with respect to the body so as to be capable of occupying in addition an inoperative position in which they do not change the profile of the body, said two flaps being disposed symmetrically with respect to the axis (XX') of the profile so that one is in the inoperative

15

position when the other projects from the body, and vice versa, according to the side of the profile on which the said carrying force is to be produced.

23. A device according to claim 22, characterised in that the flaps (14a) are substantially plane, disposed radially with respect to the body (10) and retractable by sliding in said plane in slots (18) formed in the body.

24. A device according to any one of the preceding claims, characterised in that it comprises two inflatable flaps disposed symmetrically with respect to the axis of the profile in such manner that one is deflated when the other is inflated, and vice versa, according to the side of the profile on which the said carrying force is to be produced.

25. A device according to any one of the preceding claims, characterised in that it comprises a single substantially plane rigid flap (14a) disposed radially with respect to the body and movable with respect to the latter so as to be movable from one side of the axis of symmetry (XX') of the profile to the other, on the trailing edge of the latter, according to the side of the profile on which the said carrying force is to be produced.

26. A device according to claim 22, characterised in that the flaps (14'a) are foldable on to the body (10) to match the profile of the latter.

27. A device according to any one of the preceding claims, characterised in that a flange (36) is provided at each of the ends of the body (10).

28. A device according to claim 27, characterised in that each of the flanges (36) comprises at least one circular part (36b) and in that means are provided to turn said part in the direction of the upper surface fluid flow (11).

29. A device according to claim 27, characterised in that each of the flanges (36) is rigidly connected to the body (10) and comprises on the body side means (48) for intaking fluid to the interior of the body, the centre of said means being situated on the side of the trailing edge of the profile determined by the second direction.

30. A device according to any one of claims 27 to 29, characterised in that at least one fan (58) whose axis is parallel to the longitudinal axis of the body (10) is disposed inside the latter near at least one of its ends to intake the fluid to the interior of the body via the intake zone (54) over the entire distance between them and blow said fluid to the exterior through at least one of the flanges (36).

31. A device according to claim 30, characterised in that the fan (58) blows the fluid through at least one arcuate aperture (59) formed at the periphery of the corresponding flange (36).

32. A device adapted to be placed in a fluid in movement in a first direction $(\vec{V})$ in order to produce a carrying force $(\vec{P})$ in a second direction transversely of the first direction, the device comprising an elongate body (10) having a rounded profile in cross-section in the first direction, means (12) for intaking the fluid into the body in a permeable intake zone (54) situated at least on the trailing edge of the profile, and a substantially plane rigid flap (14a) projecting from the body (10) and situated on the trailing edge of the profile on the opposite side to the side on which the said carrying force is to be produced, said flap (14a) being orientable with respect to the body (10) to allow the carrying force to be reversed, said profile defining a leading edge whose thickness increases from front to rear and a rounded trailing edge whose thickness decreases from front to rear, characterised in that the said profile is symmetrical with respect to a single axis of symmetry which together with the first direction defines an angle of incidence (i) oriented in the second direction, the leading edge of said profile being elongate, the maximum thickness (e) of the profile being between 50 % and 100 % of its length (1) in the direction defined by its axis of symmetry, said elongate body (10) comprising an impermeable envelope (10‴b) having two permeable intake zones (54, 54') disposed symmetrically with respect to said axis of symmetry (XX') and an impermeable envelope (10‴a) which is orientable in order to shut off one of the intake zones situated on a side of the profile opposite the side on which the said carrying force is to be produced, the flap (14a) being carried by said orientable impermeable envelope (10‴a) to form with the latter a single orientable member whose movement from one side of the profile to the other enables the direction of the carrying force to be reversed.

## Patentansprüche

1. Vorrichtung, die dazu bestimmt ist, in einem sich längs einer ersten Richtung $(\vec{V})$ bewegenden Fluid angeordnet zu werden, um längs einer zweiten, zu dieser ersten Richtung quer verlaufenden Richtung eine Tragkraft $(\vec{P})$ zu erzeugen, wobei die Vorrichtung einen länglichen Körper (10), der im Querschnitt längs der ersten Richtung ein abgerundetes Profil aufweist, und Mittel (12), um das Fluid in das Innere des Körpers in einem Ansaugbereich (54) anzusaugen, der sich wenigstens auf der Hinterkante des Profils auf einer ersten Seite (10a) befindet, auf der die Tragkraft erzeugt werden soll, und eine Klappe (14a, 14'a) umfaßt, die in Bezug auf den Körper (10) an der Hinterkante des Profils auf der der zweiten Richtung gegenüberliegenden Seite (10d) vorspringt, dadurch gekennzeichnet, daß das Profil eine Vorderkante, die einem pseudoelliptischen Verlauf folgend gestreckt ist, und eine Hinterkante aufweist, die gemäß einem halbkreisförmigen Verlauf gestreckt ist, daß dieses Profil in Bezug auf eine einzige Symmetrieachse (XX') symmetrisch ist, die mit der ersten Richtung $\vec{V}$ einen Einfallswinkel (i) festlegt, der nach der zweiten Richtung ausgerichtet ist, und daß die maximale Dicke (e) des Profils zwischen 50 % und 100 % seiner Länge (1) in dem durch seine Symmetrieachse festgelegten Sinn beträgt.

2. Vorrichtung nach Anspruch 1, dadurch gekennzeichnet, daß sie ferner Mittel aufweist, um die Symmetrieachse (XX'), die durch das Profil des Körpers festgelegt ist, gemäß einem Einfallswinkels (i) auszurichten, der in Bezug auf die erste Richtung $\vec{V}$ gegeben ist.

3. Vorrichtung nach Anspruch 1 oder 2, dadurch gekennzeichnet, daß die Länge der Klappe (14a) zwischen dem Radius (R) der halbkreisförmigen Hinterkante und der Hälfte dieses Radius liegt.

4. Vorrichtung nach einem der Ansprüche 1 bis 3, dadurch gekennzeichnet, daß der Körper (10) wenigstens einen einziehbaren Teil (52a-52e) auf der Höhe seiner gestreckten Vorderkante aufweist.

5. Vorrichtung nach Anspruch 4, dadurch gekennzeichnet, daß der Körper (10) wenigstens eine zylindrische, starre Hülle (50), die die Hinterkante festlegt, und eine einziehbare Ausrundung (52) aufweist, die die Vorderkante festlegt.

6. Vorrichtung nach Anspruch 5, dadurch gekennzeichnet, daß die Ausrundung eine weiche oder halbsteife und aufblasbare (52a, 52b) Hülle aufweist, die außerhalb der zylindrischen Hülle (50) angeordnet ist.

7. Vorrichtung nach Anspruch 6, dadurch gekennzeichnet, daß die Hülle (52a) aus einer einfachen Wand besteht und daß Mittel vorgesehen sind, um ein Druckgas in das Volumen einzubringen, welches die weiche Hülle (52a) von der zylindrischen, starren Hülle (50) trennt.

8. Vorrichtung nach Anspruch 6, dadurch gekennzeichnet, daß die weiche Hülle (52b) doppelwandig und vorgeformt ist, und daß Mittel vorgesehen sind, um ein Druckgas in das Volumen einzubringen, welches die zwei Wände der weichen Umhüllung (52b) trennt.

9. Vorrichtung nach Anspruch 5, dadurch gekennzeichnet, daß die Ausrundung (52) einen starren Mantel (52c), der einen kreisbogenförmigen Querschnitt aufweist und symmetrisch in Bezug auf die Symmetrieachse (XX') außerhalb der zylindrischen, starren Hülle (50) angeordnet ist, und zwei nachgiebige oder halbstarre Wände (52'c) umfaßt, die den starren Mantel mit der zylindrischen Hülle verbinden, und daß Mittel vorgesehen sind, um den starren Mantel (52c) längs der durch die Symmetrieachse (XX') festgelegten Richtung zwischen einer Betriebsstellung, in der der Mantel von der zylindrischen Hülle entfernt ist, und einer zurückgezogenen Stellung zu bewegen, in der der Mantel an die zylindrische Hülle anschließt.

10. Vorrichtung nach Anspruch 9, dadurch gekennzeichnet, daß die nachgiebigen Wände (52'c) einwandig sind und daß Mittel vorgesehen sind, um ein Druckgas in das Volumen einzubringen, welches die zylindrische Hülle (50), den starren Mantel (52c) und die nachgiebigen Wände (52'c) trennt.

11. Vorrichtung nach Anspruch 9, dadurch gekennzeichnet, daß die nachgiebigen Wände (52'c) doppelwandig und vorgeformt sind, und daß Mittel vorgesehen sind, um ein Druckgas in das Volumen einzubringen, welches die zwei Wände der nachgiebigen Wände trennt.

12. Vorrichtung nach Anspruch 5, dadurch gekennzeichnet, daß die Ausrundung (52) wenigstens eine nachgiebige Nase (52d) umfaßt, die außerhalb der zylindrischen Hülle (50) zwischen einer ersten zu der Achse derselben im wesentlichen parallel und durch die Symmetrieachse (XX') verlaufenden Stütze (52'd) und einer zweiten Stütze (52''d) angeordnet ist, die im wesentlichen zu der ersten parallel verläuft und auf der durch die zweite Richtung festgelegten Seite (10d) mit vorgegebenen Abstand von der zylindrischen Hülle angeordnet ist derart, daß die nachgiebige Nase die Vorderkante des Profils des Körpers (10) festlegt und eine Spaltwirkung mit der zylindrischen Hülle (50) hervorruft.

13. Vorrichtung nach Anspruch 12, dadurch gekennzeichnet, daß die zweite Stütze (52''d) beweglich ist und von einer Seite auf die andere der Symmetrieachse (XX') in einer zu dieser letzteren senkrechten und im wesentlichen tangential zu der zylindrischen Hülle (50) verlaufenden Ebene längs der zweiten Richtung bewegbar ist.

14. Vorrichtung nach Anspruch 12 oder 13, dadurch gekennzeichnet, daß Mittel vorgesehen sind, wenigstens eines der Enden der nachgiebigen Nase (52d) in Bezug auf die Stützen (52'd, 52''d) zu bewegen, um die Oberfläche dieser Nase verringern zu können.

15. Vorrichtung nach Anspruch 12, dadurch gekennzeichnet, daß die Ausrundung zwei nachgiebige Nasen umfaßt, die symmetrisch in Bezug auf die Symmetrieachse (XX') zwischen der ersten Stütze (52'd) und zwei in Bezug auf diese Achse symmetrischen zweiten Stützen (52''d) angeordnet sind.

16. Vorrichtung nach Anspruch 4, dadurch gekennzeichnet, daß die Ausrundung (52) zwei starre Nasen (52c) umfaßt, die einen Kreisbogenquerschnitt aufweisen und beidseitig der Symmetrieachse (XX') des Profils außerhalb der zylindrischen, starren Hülle (50) angeordnet sind, und daß Mittel vorgesehen sind, um jede der starren Nasen abwechselnd längs der durch die Symmetrieachse (XX') festgelegten Richtung zwischen einer Betriebsstellung, in der die Nase von der zylindrischen Hülle entfernt ist, und einer zurückgezogenen Stellung zu bewegen, in der die Nase der zylindrischen Hülle benachbart ist, wobei diese Mittel derart wirken, daß die starre Nase, die sich auf der der zweiten Richtung entsprechenden Seite befindet, in die Betriebsstellung und die andere starre Nase in die zurückgezogene Stellung gebracht wird.

17. Vorrichtung nach Anspruch 4, dadurch gekennzeichnet, daß der Körper (10) eine teleskopische Hülle über wenigstens einen Abschnitt seiner Länge umfaßt und daß Mittel vorgesehen sind, um wenigstens eines der Enden des Körpers (10) in Bezug auf das andere Ende dieses Körpers zu bewegen.

18. Vorrichtung nach Anspruch 17, dadurch gekennzeichnet, daß der Körper (10) wenigstens eine innere und eine äußere Hülle umfaßt, wobei wenigstens eine (10'b, 10"b, 10'"b) der Hüllen für das Fluid undurchlässig und ausrichtbar ist und im Querschnitt eine Ausnehmung (16) aufweist, die den Ansaugbereich festlegt, und daß die andere Hülle (10'"a) für das Fluid durchlässig ist.

19. Vorrichtung nach Anspruch 18, dadurch gekennzeichnet, daß der Körper (10) zwei für das Fluid durchlässige und unabhängig voneinander ausrichtbare Hüllen (10'b, 10"b) aufweist, derart, daß die Größe der Ausnehmung (16) eingestellt werden kann.

20. Vorrichtung nach Anspruch 18, dadurch gekennzeichnet, daß der Körper (10) eine undurchlässige Hülle (10'"b), die zwei durchlässige Ansaugbereiche (54, 54') festlegt, die symmetrisch zu der Achse des Profils sind, und eine undurchlässige, kreisbogenförmige, ausrichtbare Hülle (10'"a) umfaßt, mit der der eine oder der andere Ansaugbereich verschließbar ist.

21. Vorrichtung nach einem der vorhergehenden Ansprüche, dadurch gekennzeichnet, daß der Körper (10) wenigstens eine undurchlässige Hülle aufweist, die mit sich in das Innere öffnenden Türen versehen ist, um die Ansaugbereiche festzulegen.

22. Vorrichtung nach einem der vorhergehenden Ansprüche, dadurch gekennzeichnet, daß sie zwei starre und in Bezug auf den Körper derart bewegbare Klappen (14a, 14'a) aufweist, daß sie zusätzlich eine unwirksame Stellung einnehmen können, in der sie das Profil des Körpers nicht ändern, wobei diese zwei Klappen symmetrisch in Bezug auf die Achse (XX') des Profils derart angeordnet sind, daß sich eine in der unwirksamen Stellung befindet, während die andere in Bezug auf den Körper nach der Seite des Profils vorspringend angeordnet ist, auf der die Tragkraft erzeugt werden soll, und umgekehrt.

23. Vorrichtung nach Anspruch 22, dadurch gekennzeichnet, daß die Klappen (14a) im wesentlichen eben, radial in Bezug auf den Körper (10) angeordnet und durch Verschieben in dieser Ebene in Schlitze (18) zurückziehbar sind, die in dem Körper ausgebildet sind.

24. Vorrichtung nach einem der vorhergehenden Ansprüche, dadurch gekennzeichnet, daß sie zwei symmetrisch in Bezug auf die Achse des Profils angeordnete, aufblasbare Klappen umfaßt derart, daß eine abgelassen, während die andere zu der Seite des Profils hin aufgeblasen ist, auf der die Tragkraft erzeugt werden soll, und umgekehrt.

25. Vorrichtung nach einem der vorhergehenden Ansprüche, dadurch gekennzeichnet, daß sie eine einzige, starre, im wesentlichen ebene Klappe (14a) umfaßt, die radial in Bezug auf den Körper und im Bezug auf diesen letzteren derart bewegbar angeordnet ist, daß sie sich von einer Seite auf die andere der Symmetrieachse (XX') des Profils auf dessen Hinterkante zu der Seite des Profils bewegen kann, auf der die Tragkraft erzeugt werden soll.

26. Vorrichtung nach Anspruch 22, dadurch gekennzeichnet, daß die Klappen (14'a) an den Körper (10) anklappbar sind, um sich dem profil des letzteren anzuschließen.

27. Vorrichtung nach einem der vorhergehenden Ansprüche, dadurch gekennzeichnet, daß ein Flansch (36) an jedem Ende des Körpers (10) angebracht ist.

28. Vorrichtung nach Anspruch 27, dadurch gekennzeichnet, daß jeder Flansch (36) wenigstens einen kreisförmigen Abschnitt (36b) aufweist und daß Mittel vorgesehen sind, um diesen Abschnitt im Sinn der Fluidströmung am Rücken (11) zu drehen.

29. Vorrichtung nach Anspruch 27, dadurch gekennzeichnet, daß jeder Flansch (36) fest mit dem Körper (10) verbunden ist und auf der Seite desselben Ansaugmittel (48) für das Fluid in das Innere des Körpers aufweist, deren Mitte auf der Seite der Hinterkante des Profils angeordnet ist, die durch die zweite Richtung festgelegt ist.

30. Vorrichtung nach einem der Ansprüche 27 bis 29, dadurch gekennzeichnet, daß wenigstens ein Ventilator (58), dessen Achse parallel zu der Längsachse des Körpers (10) verläuft, innerhalb des letzteren nahe von wenigstens einem seiner Enden angeordnet ist, um das Fluid in das Innere des Körpers durch den Ansaugbereich (54) über die gesamte Strecke, die sie trennt, anzusaugen und dieses Fluid nach außerhalb durch wenigstens einen der Flansche (36) hindurch auszublasen.

31. Vorrichtung nach Anspruch 30, dadurch gekennzeichnet, daß der Ventilator (58) das Fluid durch wenigstens eine kreisbogenförmige Öffnung (59) ausbläst, die am Umfang des entsprechenden Flansches (36) ausgebildet ist.

32. Vorrichtung, die dazu bestimmt ist, in einem längs einer ersten Richtung $(\vec{V})$ strömenden Fluid angeordnet zu werden, um eine Tragkraft $(\vec{P})$ längs einer zweiten Richtung quer in Bezug auf die erste Richtung zu erzeugen, wobei die Vorrichtung einen länglichen Körper (10) der im Querschnitt längs der ersten Richtung ein abgerundetes Profil aufweist, Mittel (12), um das Fluid in das Innere des Körpers in einem durchlässigen Ansaugbereich (54) anzusaugen, der sich zumindest an dem Hinterrand des Profils befindet, und eine starre, im wesentlichen ebene Klappe (14a) umfaßt, die in Bezug auf den Körper (10) vorspringt und sich am Hinterrand des Profils auf der Seite befindet, die der Seite gegenüberliegt, auf der die Tragkraft erzeugt werden soll, wobei die Klappe (14a) in Bezug auf den Körper (10) ausrichtbar ist, um eine Umkehrung der Tragkraft zu bewirken, und das Profil eine Vorderkante, deren Dicke von vorne nach rückwärts zunimmt, und eine abgerundete Hinterkante aufweist, deren Dicke von vorne nach rückwärts abnimmt, dadurch gekennzeichnet, daß das Profil in Bezug auf eine einzige Symmetrieachse symmetrisch ist, die mit der ersten Richtung einen Einfallswinkel (i) festlegt, der nach der zweiten Richtung ausgerichtet ist, daß die Vorderkante des Profils gestreckt ist, daß die maximale Dicke (e) des Profils zwischen 50 % und 100 % seiner Länge (l) in der durch seine Symmetrieachse festgelegten Richtung liegt, daß der gestreckte Körper (10) eine undurchlässige Hülle (10‴b) aufweist, die zwei durchlässige Ansaugbereiche (54, 54'), die symmetrisch in Bezug auf die Symmetrieachse (XX') angeordnet sind, und eine durchlässige Hülle (10‴a) umfaßt, die ausrichtbar ist, um einen der Ansaugbereiche zu verdecken, der sich auf einer Seite des Profils befindet, die der Seite gegenüberliegt, auf der die Tragkraft erzeugt werden soll, und daß die Klappe (14a) von der undurchlässigen, ausrichtbaren Hülle (10‴a) getragen ist, um mit dieser ein einziges, ausrichtbares Teil zu bilden, dessen Bewegung von einer Seite des Profils zur anderen erlaubt, die Richtung der Tragkraft umzukehren.

FIG. 1

FIG. 3.

(a) (b) (c) (d)

FIG. 2a

FIG. 2b

FIG. 2d

FIG. 2c

FIG. 4

FIG. 5

3

FIG. 6

FIG. 7

FIG. 8ₐ

FIG. 8_b

FIG. 8_c

FIG. 8_d

FIG. 8_e

FIG. 9

6

FIG. 10

FIG. 15

FIG. 11

FIG. 12

FIG. 13

FIG. 14